# EUROPÄISCHE PATENTSCHRIFT

(11) **EP 3 816 119 B1**
(45) Veröffentlichungstag und Bekanntmachung des Hinweises auf die Patenterteilung: **30.11.2022**
(21) Anmeldenummer: 20190393.7
(22) Anmeldetag: 11.08.2020
(51) Int. Cl.: C03B 5/235, F23C 5/06, F23M 5/02

(54) **HALTERUNG FÜR EINE BRENNERLANZE EINES GASBRENNERS**
HOLDER FOR A BURNER LANCE OF A GAS BURNER
SUPPORT POUR UNE LANCE D'UN BRÛLEUR À GAZ

(30) Priorität: 29.10.2019 DE 102019129095
(43) Veröffentlichungstag der Anmeldung: 05.05.2021
(73) Patentinhaber: Horn Glass Industries AG, 95703 Plößberg (DE)
(72) Erfinder: BOUZIANE, Mohammed, 92697 Georgenberg (DE); WITTMANN, Herr Christian, 95703 Plößberg (DE); Haberkorn, Martin, 95695 Mähring (DE); Zant, Markus, 95643 Tirschenreuth (DE); Kallert, Max, 91448 Emskirchen (DE); Brüderer, Clemens, 92655 Grafenwöhr (DE); Griebenow, Peter, 4540 Bad Hall (AT); Biennek, Lars, 92637 Weiden (DE); SCHARNAGL, Herr Volker, 90762 Fürth (DE)
(74) Vertreter: Lindner Blaumeier Patent- und Rechtsanwälte

(56) Entgegenhaltungen:
- WO-A1-2018/202618
- CN-U- 202 808 567
- JP-U- S55 150 234
- US-A- 2 960 047
- US-A- 4 907 963

## Beschreibung

Die Erfindung betrifft eine Halterung für eine Brennerlanze eines Gasbrenners, umfassend eine zur Anordnung einer Schmelzvorrichtung eingerichtete, eine Durchbrechung aufweisende Dichtplatte, an der ein Kopf der Brennerlanze anliegt, ein für eine positionsfeste Anordnung an der Schmelzvorrichtung eingerichtetes Festgestell und ein an diesem um eine benachbart zur Dichtplatte verlaufende Horizontalachse schwenkbar gelagertes Schwenkgestell, an dem eine um eine Vertikalachse schwenkbare Halteeinrichtung für die Brennerlanze angeordnet ist, wobei die Dichtplatte wenigstens einen sich zum Festgestell erstreckenden Arm aufweist, über den die Dichtplatte mittels eines Befestigungselements mit dem Festgestell verbunden ist.

Eine solche Halterung beziehungsweise ein solcher Gasbrenner dient üblicherweise zur Befeuerung einer Glasschmelzanlage, in der aus Rohstoffen und/oder Recyclingglasscherben eine Glasschmelze erschmolzen wird, die anschließend zur weiteren Verarbeitung aus der Schmelzvorrichtung respektive der Schmelzwanne abgezogen wird. Hierzu befindet sich in der Schmelzvorrichtung respektive der Schmelzwanne ein entsprechender Feuerungsraum, in dem, da zum Aufschmelzen des Gemenges beachtliche hohe Temperaturen erforderlich sind, Brennstoff verbrannt wird. Dies geschieht unter Verwendung in der Regel mehrerer Gasbrenner, die seitlich entlang der Glasschmelzewanne angeordnet sind und durch entsprechende wannenseitige Durchbrechungen in der Wannenwand in die Schmelzwanne ragen respektive hierüber Zugang haben. Diese Durchbrechungen respektive Brenneröffnungen sind üblicherweise in entsprechenden Brennersteinen, die in der Ofenwand der Glasschmelzvorrichtung integriert sind, ausgebildet.

Zur Anordnung der Brennerlanze eines solchen Gasbrenners dient eine Halterung, die ihrerseits vorrichtungsseitig respektive schmelzwannenseitig fixiert ist, wozu an der Schmelzwanne beispielsweise ein oder mehrere gestellartige Stahlträger außenseitig angeordnet sind, an denen die Halterung befestigt wird. Über die Halterung ist es möglich, die Position respektive Ausrichtung der Brennerlanze relativ zur Schmelzwanne und damit auch relativ zur Oberfläche der in der Wanne befindlichen Schmelze auszurichten. Das heißt, dass hierüber der Winkel, unter dem die Brennerlanze im Raum positioniert ist und folglich in die Wanne einbläst, verändert und eingestellt werden kann. Diese Veränderbarkeit des Winkels ist für das Schmelzverhalten des Gemenges in der Wanne relevant, wie auch für die Lage des sogenannten Hotspots, also des Ortes der höchsten Temperatur, der wiederum ausschlaggebend für das Konvektionsverhalten innerhalb der Schmelze ist. Ein solcher Gasbrenner kommt bei unterschiedlichen Schmelzwannentypen wie U-Flammenwannen oder Querflammenwannen zum Einsatz.

Eine Halterung für eine solche Brennerlanze ist beispielsweise aus WO2018/202618 A1 bekannt. Diese Halterung weist ein entsprechendes Festgestell auf, das positionsfest an der Schmelzvorrichtung anzuordnen ist, sowie ein Schwenkgestell, das um eine Horizontalachse schwenkbar zum Festgestell verschwenkt werden kann. An dem Schwenkgestell wiederum ist eine entsprechende Halteeinrichtung für die Brennerlanze angeordnet. Die Brennerlanze liegt mit ihrem Kopf an einer eine entsprechende Durchbrechung, über die Zutritt zum Feuerungsraum gegeben ist, aufweisenden Dichtplatte an. Diese Dichtplatte sitzt in oder an der Wannenaußenwand und ist bei der aus WO2018/202618 A1 bekannten Halterung fest mit dem Fest- und dem Schwenkgestell verbunden. Denn die Dichtplatte weist zwei sich in Richtung der Gestelle erstreckende Arme auf, an denen das Fest- und das Schwenkgestell mit entsprechenden Gestellarmen befestigt sind und durch die die Horizontalachse verläuft. Hierzu weist die Dichtplatte entsprechende Lagerbuchsen auf, die mit den entsprechenden Lagerachsen der beiden Gestellteile zur Verbindung und Lagerung zusammenwirken. Diese Horizontalachse befindet sich möglichst nahe an der Dichtplatte selbst, damit der Lanzenkopf, der leicht kugelförmig ausgeführt ist und in eine entsprechende kugel- oder kalottenförmige Ausnehmung im Bereich der Dichtplattendurchbrechung eingreift, sich beim Verschwenken um die Horizontalachse möglichst wenig relativ zur Dichtplatte bewegt.

Diese Ausgestaltung ist insoweit nachteilig, als im Falle einer Reinigung der Dichtplatte oder eines Austauschs derselben die gesamte Halterung respektive beide Gestelle demontiert werden müssen, damit die mit ihnen in der Horizontalachse fest verbundene Dichtplatte entnommen werden kann. Dies gestaltet sich insbesondere deshalb schwierig, als die Horizontalachse möglichst nah benachbart zur Dichtplatte verläuft. Ist die Dichtplatte demzufolge heiß, gilt dies auch für den Bereich der Verbindung der Dichtplatte mit den Gestellen und damit auch den Bereich der Horizontalachse, was es mitunter äußerst schwierig beziehungsweise unmöglich macht, im heißen Zustand diese Verbindung zu lösen und die Dichtplatte ziehen zu können.

Der Erfindung liegt damit das Problem zugrunde, eine demgegenüber verbesserte Halterung anzugeben.

Zur Lösung dieses Problems ist bei einer Halterung der eingangs genannten Art erfindungsgemäß vorgesehen, dass das Befestigungselement von der Dichtplatte weiter entfernt angeordnet ist als die Horizontalachse.

Bei der erfindungsgemäßen Halterung ist mit besonderem Vorteil die Schwenklagerung des Schwenkgestells am Festgestell um die Horizontalachse und die Befestigung der Dichtplatte am Festgestell voneinander getrennt, das heißt, sie fallen nicht, wie im Stand der Technik, zusammen. Die Horizontalachse befindet sich möglichst nah benachbart zur Dichtplatte, wobei die die Verschwenkung der Gestellteile zueinander ermöglichende Schwenkverbindung nur zwischen diesen entsprechenden Gestellteilen gegeben ist, die Dichtplatte selbst nimmt nicht an der Ausbildung der Schwenklagerung teil. Die Befestigungsposition der Dichtplatte am Festgestell, oder der Ort der festen Verbindung von Dichtplatte und Festestell durch das Befestigungs- oder Verbindungselement, hingegen ist deutlich weiter zur Dichtplatte beziehungsweise zu dem an der Ofenwand anliegendem Plattenkörper beabstandet als die Horizontalachse, das heißt, sie befindet sich relativ weit entfernt von der Plattenebene. Dies führt zu einer Reihe von Vorteilen. Denn zum einen ist zum Entfernen der Dichtplatte die Schwenklagerung des Schwenkgestells am Festgestell nicht zu lösen, da die Schwenklagerung nicht auch der Befestigung der Dichtplatte am Gestellt dient, sondern wie beschrieben ausschließlich der Ausbildung der entsprechenden Horizontalachse. Vielmehr ist es lediglich erforderlich, die zur Plattenebene deutlich weit entfernte Befestigung der Dichtplatte am Festgestell zu lösen, woraufhin grundsätzlich die Dichtplatte - natürlich nach vorangegangener Demontage der Brennerlanze, die wie beschrieben mit ihrem Kopf in die entsprechende kalottenscheibenförmige Aufnahme einer Dichtplatte greift - entnommen werden kann. Darüber hinaus ist diese Demontage auch bei relativ heißer Dichtplatte möglich, da aufgrund der entfernten Befestigungsposition der Dichtplatte am Festgestell das entsprechende Befestigungselement, das zum Lösen zu betätigen ist, deutlich kühler ist, so dass ein Arbeiten auch bei heißer Dichtplatte in diesem Bereich möglich ist.

Durch die erfindungsgemäße Trennung der Schwenklagerung der Gestellteile aneinander und der Befestigung der Dichtplatte am Festgestell ist somit eine einfache und nahezu jederzeit mögliche Demontage der Dichtplatte möglich, ohne hierzu das Gestell in irgendeiner Weise, insbesondere im Bereich der Schwenklagerung, zerlegen zu müssen.

Wenngleich bei entsprechender geometrischer Ausgestaltung des dichtplattenseitigen Arms sowie des Festgestells nur ein Arm für die plattenseitig entfernte Verbindung von Dichtplatte und Festgestell vorgesehen sein kann, ist es zweckmäßig, wenn zwei parallele Arme vorgesehen sind, die jeweils über ein Befestigungselement mit dem Festgestell verbunden sind. Diese beiden Arme sind bevorzugt an den Seiten der Dichtplatte vorgesehen und erstrecken sich zu den ebenfalls voneinander horizontal beabstandet vorgesehenen Gestellarmen des Festgestells.

Als Befestigungselement wird zweckmäßigerweise eine Schraubverbindung verwendet, umfassend einen entsprechenden Befestigungsbolzen oder eine Schraube sowie eine entsprechende Mutter. Dabei kann an dem oder jedem Arm eine erste Durchbrechung und am Festgestell eine oder jeweils eine zweite Durchbrechung vorgesehen sein, die von dem als Schraubverbindung ausgeführten Befestigungselement durchgriffen sind. Eine solche Schraubverbindung ist auf einfache Weise zu lösen, bietet aber gleichzeitig auch eine hinreichende Fixierung.

Eine besonders vorteilhafte Weiterbildung dieser Ausgestaltung sieht vor, dass die erste oder die zweite Durchbrechung als bogenförmiges Langloch ausgeführt ist, während die zweite oder die erste Durchbrechung als Bohrung ausgeführt ist. Diese Ausgestaltung bietet den besonderen Vorteil mit sich, als aufgrund der Langlochausgestaltung eine gewisse Verstellmöglichkeit der Orientierung der Dichtplatte beziehungsweise des Plattenkörpers relativ zum Festgestell gegeben ist. Wie beschrieben liegt die Dichtplatte beziehungsweise der Plattenkörper an der Schmelzwannenaußenseite an. Die Befestigungsebene der Halterung selbst respektive des Festgestells an einer entsprechenden Stahlträgerkonstruktion befindet sich üblicherweise unterhalb davon und gegebenenfalls auch etwas seitlich versetzt. Da nicht immer sichergestellt ist, dass die Fläche oder Ebene, an der die Dichtplatte wannenseitig anliegt, auch tatsächlich ebenflächig ist respektive parallel zur Befestigungsebene des Festgestells verläuft, sondern mitunter auch ein geringer Winkelversatz gegeben sein kann, ist es mit der erfindungsgemäßen Ausgestaltung unter Ausführung eines bogenförmigen Langlochs zur Aufnahme der Schraubverbindung möglich, einen solchen leichten Winkelversatz ausgleichen zu können. Denn durch diese Langlochausführung besteht die Möglichkeit, die Dichtplatte beziehungsweise den Plattenkörper relativ zum Festgestell geringfügig zu verschwenken, so dass ein entsprechender Winkelversatz problemlos ausgeglichen werden kann.

Dabei ist es besonders zweckmäßig, wenn das Langloch an einer Seite offen ist. Dies ermöglicht es, die Befestigung nur durch leichtes Aufschrauben zu lösen, ohne dass der Befestigungsbolzen oder die Schraube gezogen werden muss. Denn durch leichtes Lösen der Schraubverbindung kann dann bereits die Dichtplatte respektive deren Arm relativ zum Festgestell verschwenkt werden und dabei der Gewindebolzen oder die Schraube aus dem offenen Langloch herausgeführt werden, so dass die Schraubverbindung einerseits in der zweiten Durchbrechung aufgenommen bleibt, mithin also nicht verloren geht, zum anderen aber auch der Demontagevorgang einfach vonstatten gehen kann.

Eine vorteilhafte Weiterbildung der Erfindung sieht ferner vor, dass an der Dichtplatte zwei Stützarme zum Festgestell hin abstehen, an denen zwei Stützzapfen vorgesehen sind, die in jeweils eine senkrecht zur Horizontalachse offene Aufnahme am Festgestell eingelegt sind. Über diese Stützarme respektive den Eingriff der Stützzapfen in die offenen Aufnahmen am Festgestell wird die Anordnung des Lanzenkopfes in der rundlichen oder kalottenförmigen Ausnehmung oder Aufnahme an der Dichtplatte fixiert. Die Brennerlanze wird im Rahmen ihrer Montage an der am Schwenkgestell vorgesehenen Halteeinrichtung befestigt, wozu eine oder zwei entsprechende Halteklammern vorgesehen sind. Hierbei wird die Brennerlanze mit ihrem Kopf in die dichtplattenseitigen Aufnahme oder Ausnehmung geschoben, so dass die Dichtplatte mit ihren Stützzapfen in die offenen, quasi hakenförmigen Aufnahmen gedrückt wird. Diese Stützzapfen und ihre Anordnung in den Aufnahmen dient lediglich der Abstützung der Dichtplatte, ein Verschwenken findet hier nicht statt. Im Rahmen der Demontage, wenn die Brennerlanze demontiert ist, und wenn das oder die Befestigungselemente gelöst sind, wird die Dichtplatte auf einfache Weise mit ihren Stützzapfen aus den Aufnahmen geschoben und kann entfernt werden. Dabei können die offenen, hakenförmigen Aufnahmen letztlich an beliebiger Stelle vorgesehen sein, sie befinden sich jedoch bevorzugt an den Enden der Gestellarme, die benachbart zur Dichtplatte sind, so dass die Stützarme kurz ausgeführt werden können.

Gemäß einer alternativen Befestigungsmöglichkeit der Dichtplatte am Festgestell zur vorstehend beschriebenen Ausgestaltung mit den von dem oder den Befestigungselementen durchgriffenen Durchbrechungen kann vorgesehen sein, dass an dem oder den Armen der Dichtplatte ein an einer Seite offener Schlitz vorgesehen ist, in den ein in einer an einem Gestellarm des Festgestells ausgebildeten Nut geführter Nutstein, der über ein Befestigungselement mit dem Arm verbunden ist, eingreift. Bei dieser Ausgestaltung ist der oder sind die Tragarme mit zu dem Armende hin offenen Schlitzen ausgeführt, die der Aufnahme eines Nutsteins dienen, der am Festgestell angeordnet ist. Der Nutstein selbst ist wiederum in einer an dem jeweiligen Gestellarm des Festgestellts vorgesehenen, länglichen Nut aufgenommen, in der er verschoben werden kann.

Wird die Dichtplatte montiert, so wird der Nutstein längs seiner Nut bewegt und in den tragarmseitigen Schlitz eingeführt, wonach das Befestigungselement gesetzt wird und der Tragarm mit dem Nutstein verschraubt wird, der seinerseits dann wiederum am Gestellarm über ein Befestigungselement fixiert werden kann. Nachdem bevorzugt zwei solcher Tragarme vorgesehen sind, erfolgt demzufolge eine beidseitige Fixierung über den jeweiligen Nutstein. Zum Lösen der Befestigung sind lediglich die entsprechenden Befestigungselemente zu lösen, so dass der Nutstein wieder längs seiner Nut verschoben und aus dem Schlitz geführt werden kann, woraufhin die Dichtplatte wieder entnommen werden kann.

Um das Festgestell und das Schwenkgestell möglichst einfach und leicht auszuführen, sind sie zweckmäßigerweise mit jeweils möglichst schmalen zwei Gestellarmen versehen, die einander endseitig übergreifen, wobei im Übergriffsbereich die Horizontalachse vorgesehen ist. Hierzu ist beispielsweise an den festgestellseitigen Gestellarmen eine entsprechende Gewindebuchse vorgesehen, die seitlich absteht, und die vom jeweiligen Gestellarm des Schwenkgestells übergriffen wird. Ein entsprechender Achsbolzen ist von außen in die Gewindebuchse eingeschraubt, worüber die Schwenkachse gebildet wird.

Wie beschrieben wird zur Vertikalverstellung das Schwenkgestell relativ zum Festgestell um die Horizontalachse verschwenkt. Dies führt dazu, dass die Brennerlanze vertikal um die Horizontalachse verschwenkt wird und mithin die Ausblasrichtung in den Feuerraum vertikal variiert werden kann. Zur Verstellung ist zweckmäßigerweise eine erste Stelleinrichtung vorgesehen, die das Festgestell und das Schwenkgestell koppelt und zum Verschwenken des Schwenkgestells relativ zum positionsfesten Festgestell um die Horizontalachse eingerichtet ist.

Bezüglich der Ausgestaltung dieser ersten Stelleinrichtung sind drei unterschiedliche Varianten denkbar. Gemäße einer ersten Alternative kann die Stelleinrichtung ein Spannschloss aufweisen, umfassend eine Spannschlossmutter und zwei Gewindebolzen mit unterschiedlicher Gewinderichtung, von denen einer mit dem Festgestell und der andere mit dem Schwenkgestell gekoppelt ist. Die Spannschlossmutter läuft auf beiden Gewindebolzen, die je nach Drehrichtung der Spannschlossmutter aufeinander zu- oder voneinander wegbewegt werden können, so dass aufgrund der Kopplung der Gewindebolzen mit dem Fest- und dem Schwenkgestell das Schwenkgestell relativ zum Festgestell verschwenkt werden kann.

Eine alternative Ausgestaltung sieht vor, dass die Stelleinrichtung eine Schubkurbel aufweist, umfassend eine positionsfeste, drehbare Gewindespindel, auf der eine Spindelmutter läuft, die mit wenigstens einer Schubstange oder einem Schubrohr verbunden ist, das über eine Gelenkstrebe gelenkig mit dem Schwenkgestell verbunden ist. Hier kommt also ein Spindeltrieb zum Einsatz, wobei auch dieser Spindeltrieb eine einfache Verschwenkung des Schwenkgestells ermöglicht, indem lediglich die Gewindespindel gedreht werden muss, sodass die Schubstange oder das Schubrohr linear längs der Gewindespindel bewegt wird, was zur Verschwenkung führt.

Alternativ kann die Stelleinrichtung ein elektrisch oder pneumatisch arbeitender Antrieb sein oder einen solchen umfassen, so dass eine automatische Verstellung des Schwenkgestells erfolgt.

Dabei kann die Spannschlussmutter entweder manuell oder mittels eines elektrischen oder pneumatischen Antriebsmittels gedreht werden, ebenso kann auch die Gewindespindel über eine manuelle Kurbel oder mittels eines elektrischen oder pneumatischen Antriebsmittels drehbar sein. Das heißt, dass, egal welche Stellvariante gewählt wird, entweder eine manuelle Verstellung möglich ist, oder eine automatische unter Verwendung eines elektrischen oder pneumatischen Antriebsmittels.

Neben der Vertikalverschwenkung besteht auch die Möglichkeit, die Brennerlanze horizontal zu verschwenken. Dies geschieht, indem die Halteeinrichtung, an der die Brennerlanze befestigt wird, relativ zum ihr gegenüber positionsfesten Schwenkgestell um eine Vertikalachse verschwenkt wird. Diese Vertikalachse befindet sich bevorzugt im Bereich der Horizontalachse und schneidet diese zweckmäßigerweise. Dabei kann das Schwenkgestell eine Gestellplatte aufweisen, auf der die Halteeinrichtung angeordnet und schwenkbar gelagert ist, wobei die Halteeinrichtung über eine zweite Stelleinrichtung relativ zur Gestellplatte um die Vertikalachse schwenkbar ist. Auch hier kommt also zum Verschwenken eine zweite Stelleinrichtung zum Einsatz, um die Brennerlanze möglichst positionsgenau und auch reproduzierbar verschwenken und einstellen zu können.

Dabei kann gemäß einer ersten Ausgestaltungsvariante die zweite Stelleinrichtung ein über einen Spindeltrieb antreibbares Parallelkurbelgetriebe umfassen. Das Parallelkurbelgetriebe koppelt die Gestellplatte mit der Halteeinrichtung und umfasst mehrere Getriebestreben, die zum Teil mit der Gestellplatte, zum Teil mit der Halteeinrichtung und untereinander verbunden respektive schwenkbar gekoppelt sind. Wird zum Beispiel über den Spindelantrieb das Parallelkurbelgetriebe betätigt, so kommt es zu einer Bewegung der einzelnen Getriebestreben relativ zueinander, was zur Verschwenkung der Halteeinrichtung relativ zum Festgestell respektive der Gestellplatte führt.

Alternativ zur Verwendung eines solchen Parallelkurbelgetriebes ist es auch denkbar, dass die Gestellplatte eine oder zwei bogenförmige Führungen aufweist, in die Führungselemente der Halteeinrichtung greifen, wobei die zweite Stelleinrichtung einen Spindeltrieb umfassend eine positionsfeste, drehbare Gewindespindel und eine auf dieser laufende, mit der Halteeinrichtung gekoppelte Spindelmutter aufweist. Hier ist das Parallelkurbelgetriebe durch eine entsprechende Spindeltriebkopplung ersetzt. Der Spindeltrieb, der positionsfest mit der Gestellplatte gekoppelt ist, weist neben der Gewindespindel eine längs dieser verschiebbaren Spindelmutter auf, die ihrerseits über eine entsprechende Mitnehmerkopplung mit der Halteeinrichtung gekoppelt ist, die ihrerseits über entsprechende Führungen an der Gestellplatte schwenkgelagert ist. Diese respektive jede Führung ist zweckmäßigerweise als Durchbrechung ausgeführt, in die das Führungselement eingreift. Dabei ist das Führungselement zweckmäßigerweise als Rolle ausgeführt, es kann aber auch eine einfache Gleitlagerung respektive Gleitführung vorgesehen sein.

Die Kopplung der Spindelmutter mit der Halteeinrichtung erfolgt zweckmäßigerweise über einen Mitnehmer, der in eine Aufnahme an der Halteeinrichtung eingreift. Der Mitnehmer kann zum Beispiel ein einfacher Zapfen sein, der in eine entsprechende Bohrung an der Halteeinrichtung respektive einer Tragplatte eingreift. Auch die Ausführung des Mitnehmers als Rolle ist denkbar.

Auch hier kann wiederum, unabhängig davon, ob nun die zweite Stelleinrichtung das Parallelkurbelgetriebe oder den Spindeltrieb aufweist, das Parallelkurbelgetriebe oder der Spindeltrieb über eine Kurbel manuell oder mittels eines elektrischen oder pneumatischen Antriebs mittels betätigbar sein. Auch hier ist also eine manuelle oder automatisch gesteuerte Verstellung denkbar.

Zweckmäßig ist es ferner, wenn das Festgestell einen horizontal beweglichen Schlitten aufweist, an dem das Schwenkgestell angeordnet ist und mit dem die Dichtplatte über den wenigstens einen Arm verbunden ist. Dies ermöglicht es, das Schwenkgestell nebst Dichtplatte auf einfache Weise zu positionieren und auszurichten, was es insbesondere erlaubt, die Halterung auch nachträglich an eine bestehende Schmelzwanne zu montieren.

Der Schlitten selbst ist bevorzugt auf einer horizontalen Führungsplatte des Festgestells linear bewegbar geführt ist und kann so einfach bewegt werden. Die Führungsplatte bildet folglich einen Teil der Linearführung des Schlittens

In Weiterbildung der Erfindung kann, alternative oder, bevorzugt, zusätzlich zum horizontalen Schlitten, das Festgestell einen vertikal beweglichen Schlitten aufweisen, über den das Schwenkgestell und die Dichtplatte vertikal bewegbar ist. Diese Vertikalbeweglichkeit ermöglicht ebenso eine exakte Positionierung und Ausrichtung der relevanten Komponenten der Halterung. Ist folglich sowohl eine horizontale als auch eine vertikale Verstellbarkeit gegeben, kann die Brennerhalterung bestmöglich ausgerichtet werden.

Der vertikale Schlitten ist zweckmäßigerweise auf einer Montageplatte des Festgestells, über die das Festgestell an der Schmelzvorrichtung befestigbar ist, bewegbar ist. Die Montageplatte bildet die Schnittstelle zur Schmelzwanne und gleichzeitig einen Teil der Linearführung des vertikalen Schlittens, der auf ichr linear vertikal läuft.

Ist sowohl eine horizontale als auch eine vertikale Verstellung vorgesehen, so kann der vertikale Schlitten mittels einer Schlittenplatte gebildet sein, an der die Führungsplatte des horizontalen Schlittens angeordnet ist. Es ist also eine Art T-Anordnung gegeben, die den vertikalen Schlitte und die Linearführung des horizontalen Schlittens darstellt.

Der horizontale und/oder der vertikale Schlitten kann gemäß einer ersten Alternative manuell verschiebbar und arretierbar sein. Demgemäß erfolgt also eine rein manuelle Verstellung und Ausrichtung, wobei die Endposition manuell arretiert wird, z.B. durch eine Feststellschraube oder ähnliches. Alternativ ist es denkbar, dass der horizontale und/oder der vertikale Schlitten mittels eines elektrischen oder pneumatischen Antriebsmittels verschiebbar ist. Hier erflogt eine automatische, über eine Steuerungseinrichtung gesteuerte Schlittenbewegung, die sehr exakt erfolgen kann. Z.B. kann ein geeigneter Elektromotor als Antriebsmittel verwendet werden, alternativ ist auch ein rein pneumatischer Antrieb denkbar.

Bevorzugt findet die horizontale Schlittenverstellung manuell statt, da dies relativ einfach von Hand möglich ist, während die vertikale Schlittenverstellung automatisch erfolgt, da hierbei ein ungleich größeres Gewicht anzuheben oder abzusenken ist.

Da im Betrieb die Dichtplatte sehr heiß wird, sieht eine zweckmäßige Weiterbildung der Erfindung die Anordnung einer Kühleinrichtung zum Kühlen der Dichtplatte vor. Hierüber kann die Dichtplatte, vorzugsweise direkt, gekühlt und auf einer niedrigeren Temperatur gehalten werden.

Wenngleich eine Flüssigkeitskühlung denkbar ist, bevorzugt die Erfindung als Kühleinrichtung eine Luftkühleinrichtung, die ein Ausblaselement, über das Kühlluft auf die Dichtplatte blasbar ist aufweist. Über eine an das Ausblaselement angeschlossene Kühlluftzufuhr wird Kühlluft zugeführt, die über das Ausblaselement bevorzugt direkt auf die Dichtplatte geblasen wird. Dabei wird zweckmäßigerweise als Ausblaselement eine Schlitzdüse verwendet bzw, das Ausblaselement umfasst eine solche. Eine Schlitzdüse erlaubt es, die Kühlluft breit aufgefächert auszublasen, so dass eine effiziente Kühlung der doch größerflächi8gen Dichtplatte möglich ist.

Schließlich hat es sich für die Einstellung des geforderten horizontalen und/oder vertikalen Schwenkwinkels als vorteilhaft erwiesen, wenn Anzeigemittel zum Anzeigen der Winkeleinstellung um die horizontale und/oder die vertikale Schwenkachse vorgesehen sind. Diese Anzeigemittel können als einfache, eine Winkelmaßangabe aufweisende Platten oder Scheiben, die an einer geeigneten Position angeordnet sind, und als mit dem verschwenkten Bauteil verbundene Zeiger, die auf der Platte oder Scheibe den eingestellten Ist-Schwenkwinkel anzeigen, ausgeführt sein.

Ferner betrifft die Erfindung eine Schmelzvorrichtung, insbesondere eine Galsschmelzwanne, umfassend wenigstens eine Halterung der vorstehend beschriebenen Art zur Aufnahme einer Brennlanze.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Perspektivansicht einer Prinzipdarstellung einer erfindungsgemäßen Halterung in der Montagestellung an einer nur teilweise gezeigten Glasschmelzwanne,
- Fig. 2: die Anordnung aus einer anderen Blickrichtung,
- Fig. 3: eine Perspektivansicht nur der Halterung aus Figur 1,
- Fig. 4: eine Seitenansicht der Halterung, ohne Brennerlanze, in einer ersten vertikalen Schwenkposition,
- Fig. 5: die Halterung aus Fig. 4 in einer zweiten vertikalen Schwenkposition,
- Fig. 6: eine Aufsicht auf einen Teil der Halterung, ohne Brennerlanze, zur Darstellung des der horizontalen Verschwenkung dienenden Parallelkurbelgetriebes,
- Fig. 7: eine Teilansicht der Halterung nebst Brennerlanze in verschiedenen horizontalen Schwenkpositionen,
- Fig. 8: eine perspektivische Prinzipdarstellung einer Dichtplatte einer ersten Ausführungsform,
- Fig. 9: eine Teilansicht der Halterung nebst Brennerlanze und Dichtplatte,
- Fig. 10: eine vergrößerte Teilansicht des Bereichs X aus Fig. 9 unter Darstellung der Schwenklagerung des Schwenkgestells am Festgestell und der Hakenaufnahme mit eingreifenden Stützzapfen der Dichtplatte,
- Fig. 11: eine Prinzipdarstellung zur Erläuterung des Montagevorgangs der Dichtplatte am Festgestell,
- Fig. 12: eine Prinzipdarstellung zur Erläuterung der Ausrichtmöglichkeit der Orientierung der Dichtplatte relativ zum Festgestell,
- Fig. 13: eine Seitenansicht einer Halterung ohne Brennerlanze mit einer zweiten Variante einer der Vertikalverstellung dienenden Stelleinrichtung in einer ersten Position,
- Fig. 14: die Anordnung aus Fig. 13 in einer zweiten Schwenkposition,
- Fig. 15: eine Seitenansicht eines Teils der Halterung nebst Brennerlanze mit einer zweiten Ausführungsform einer zweiten Stelleinrichtung für die Horizontalverschwenkung,
- Fig. 16: eine Teilansicht der Halterung zur Darstellung der zweiten Stelleinrichtung,
- Fig. 17: eine Aufsicht auf die Anordnung aus Fig. 16,
- Fig. 18: die Anordnung aus Fig. 17 in zwei verschiedenen horizontalen Schwenkpositionen,
- Fig. 19: eine Teilansicht einer weiteren Ausführungsform einer Halterung mit einer über einen Nutstein erfolgenden Befestigung der Dichtplatte an dem Festgestell,
- Fig. 20: eine Prinzipdarstellung einer weiteren Ausführungsform der Halterung in einer Seitenansicht,
- Fig. 21: die Halterung aus Fig. 20 in einer Aufsicht,
- Fig. 22: eine Teilansicht der Halterung aus Fig. 20 unter Darstellung eines Winkelanzeigemittels für die Vertikalverschwenkung,
- Fig. 23: eine Teilansicht der Halterung aus Fig. 20 unter Darstellung eines Winkelanzeigemittels für die Horizontalverschwenkung, und
- Fig. 24: eine Darstellung einer Kühleinrichtung zum Kühlen der Dichtplatte.

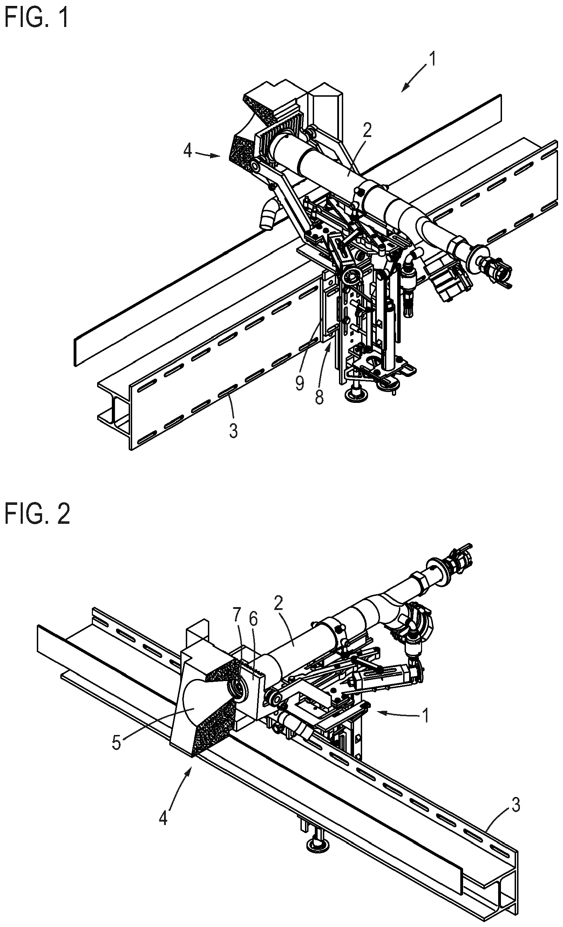

Die Figuren 1 bis 3 zeigen eine erfindungsgemäße Halterung 1 für eine Brennerlanze 2 eines Gasbrenners, wobei die Halterung 1 an einer Stahlträgerkonstruktion 3, die benachbart zu einer nur teilweise gezeigten Wand 4 einer Schmelzvorrichtung, üblicherweise eine Glasschmelzwanne, angeordnet ist, befestigt ist. Die Halterung 1 dient der Aufnahme und der sowohl vertikalen als auch horizontalen Verstellung der Brennerlanze 2, über die das Gas in den Feuerraum, also das Innere der Schmelzwanne eingeblasen wird, um die entsprechende, zum Schmelzen des Glases erforderliche Temperatur im Ofeninneren zu erreichen.

Hierzu ist der Brennerlanze 2 in der Ofenwand 4 eine Brenneröffnung 5 nachgeschaltet, die sich, siehe Fig. 2, konisch erweitert, und über die unter Zwischenschaltung einer Dichtplatte 6, die eine entsprechende Durchbrechung 7 aufweist, über die Brennerlanze 2 eingeblasen werden kann. Der grundsätzliche Aufbau respektive die Funktion eines solchen Gasbrenners beziehungsweise einer solchen Schmelzvorrichtung ist bekannt.

Die Brennerlanze 2 ist wie beschrieben sowohl um eine Horizontalachse verschwenkbar, so dass sie vertikal verschwenkt werden kann, als auch um eine Vertikalachse, so dass sie horizontal verschwenkt werden kann. Dieser ermöglicht es, die Orientierung und Ausrichtung der Ausblasrichtung der Brennerlanze 2 relativ zur Oberfläche der Glasschmelze verändern zu können, was Einfluss auf die Ofentemperatur hat.

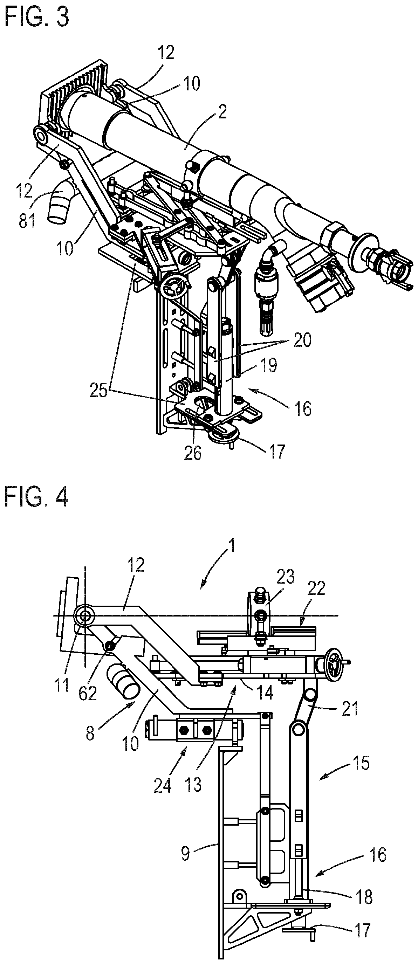

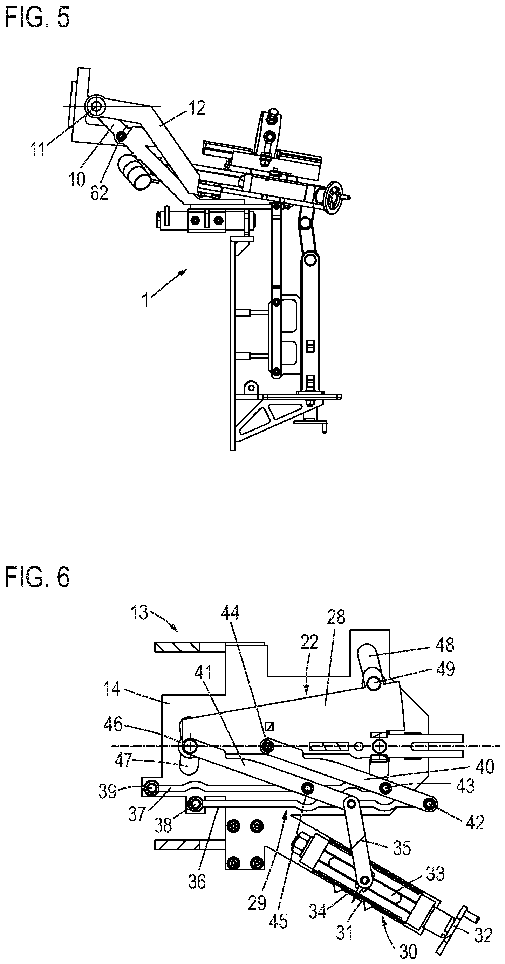

Zu diesem Zweck weist die Halterung 1, siehe hierzu insbesondere die Figuren 4 und 5, die die Halterung 1 ohne Brennerlanze 2 zeigen, ein Festgestell 8 auf, das einen Befestigungsgestellteil 9 aufweist, über den das Festgestell 8 und mithin die gesamte Halterung 1 an der Stahlträgerkonstruktion 3 befestigt wird. Daneben weist das Festgestell unter anderem zwei Gestellarme 10 auf, siehe unter anderem Fig. 3, die der Ausbildung einer Horizontalachse 11 in Verbindung mit zwei Gestellarmen 12, die Teil eines Schwenkgestells 13 sind, dienen. Auf die Schwenkachsausbildung wird nachfolgend noch näher eingegangen.

Das Schwenkgestell 13 ist, wie beschrieben, um die Horizontalachse 11 relativ zum positionsfesten Festgestell 8 verschwenkbar, wobei das Schwenkgestell 13 eine Gestellplatte 14 aufweist, die über eine erste Stelleinrichtung 15 mit dem Festgestell 8 respektive dem Gestellbefestigungsteil 9 gekoppelt ist und, siehe die Fig. 4 und 5, ein Verschwenken um die Horizontalachse 11 ermöglicht. Die Fig. 4 und 5 zeigen zwei unterschiedliche Schwenkpositionen, wobei ausgehend von Fig. 4 die Brennerlanze im Übergang zu Fig. 5 nach unten abgeschwenkt wurde, mithin also die Ausblasrichtung nach oben verschwenkt wurde.

Die erste Schwenkeinrichtung 15 weist eine Schubkurbel 16 auf, umfassend eine Kurbel 17 mit nachgeschalteter Gewindespindel 18, auf der eine nicht näher gezeigte Spindelmutter läuft, und die in einem Spindelgehäuse 19 aufgenommen ist, seitlich zu dem zwei Schubstangen 20 angeordnet sind, die über nicht näher gezeigte Verbindungsbolzen mit der Spindelmutter gekoppelt sind. Über eine schwenkbar gelagerte Verbindungsstrebe 21 sind die beiden Schubstangen 20 sodann gelenkig mit der Gestellplatte 14 verbunden.

Wird nun die Kurbel 17 in die eine oder andere Richtung gedreht, so wandert die Spindelmutter vertikal auf der Gewindespindel 18 nach oben oder unten, je nachdem kommt es zu einem Verschwenken nach oben oder nach unten, wie die Fig. 4 und 5 zeigen. Dies führt wiederum zu einem Verschwenken der Brennerlanze 2, die an einer entsprechenden Halteeinrichtung 22, die um eine Vertikalachse 27 verschwenkbar an der Gestellplatte 14 angeordnet ist, befestigt ist. Hierzu ist eine entsprechende Klemmschelle oder ein Klemmring 23 vorgesehen, den die Brennerlanze 2 durchgreift, siehe Fig. 3.

Des Weiteren vorgesehen ist eine Positioniereinrichtung 24. Diese Positionierrichtung 24 ermöglicht ein horizontales Verschieben, wozu, siehe beispielsweise Fig. 3, an entsprechenden Trägerplatten 25 des Festgestells 8 entsprechende Langlöcher 26 ausgebildet sind, die eine entsprechende Horizontalverschiebung ermöglichen. Diese Horizontalverschiebung ist erforderlich, um die Halterung 1 exakt relativ zur Ofenwand 4 ausrichten zu können, nachdem das Gestelltbefestigungsteil 9 an der Stahlträgerkonstruktion 3 befestigt wird und der Abstand derselben zur Ofenwand 4 nicht immer konstant ist.

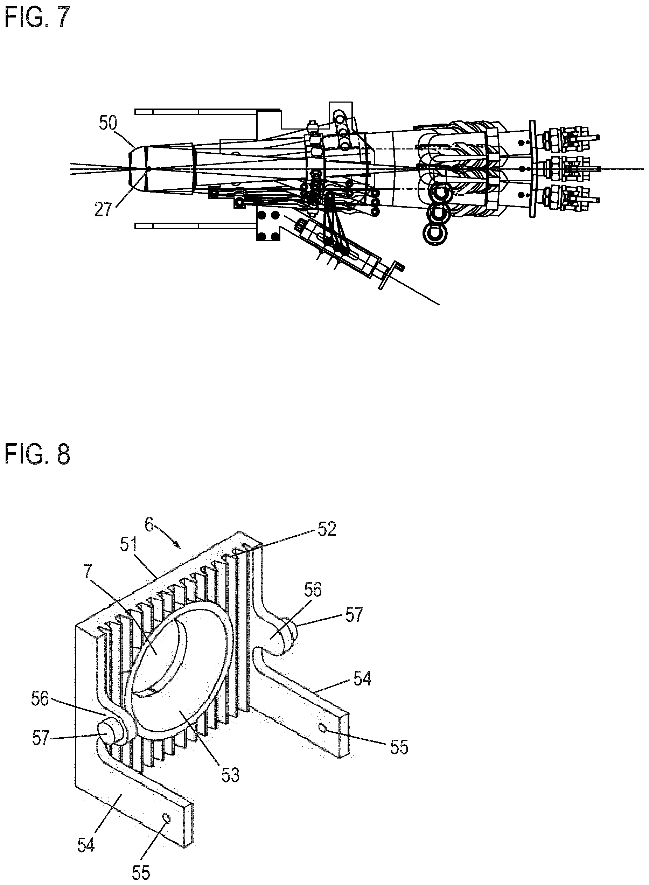

Wie beschrieben ist die Halteeinrichtung 22 um eine Vertikalachse 27, siehe Fig. 7, relativ zum Schwenkgestell 13 verschwenkbar, wobei die Vertikalachse 27 nicht immer zwingend vertikal verläuft, sondern auch unter einem leichten Winkel angestellt sein kann, je nachdem, um welchen Winkel das Schwenkgestell 13 relativ zum Festgestell 8 vertikal verschwenkt ist. Der Verständlichkeit halber wird nachfolgend jedoch von einer Vertikalachse gesprochen wie auch von einer Horizontalverschwenkung der Halteeinrichtung 22 relativ zum Schwenkgestell 13, auch wenn es sich aufgrund des vertikalen Verschwenkwinkels nicht immer um eine reine Horizontalbewegung handelt.

Die Halteeinrichtung 22 weist eine Tragplatte 28 auf, siehe Fig. 6, die über ein Parallelkurbelgetriebe 29 mit dem Schwenkgestell 13 respektive der Gestellplatte 14 schwenkgekoppelt ist. Das Parallelkurbelgetriebe 29 ist mit einer zweiten Stelleinrichtung 30 hier in Form eines Spindeltriebs 31 betätigbar. Der Spindeltrieb 31 weist eine über eine Kurbel 32 drehbare Gewindespindel 33 auf, auf der eine Spindelmutter 34 läuft, die wiederum schwenkbar mit einer Verbindungsstange 35 verbunden ist. Diese Verbindungsstange 35 koppelt die zweite Stelleinrichtung 30 mit dem Parallelkurbelgetriebe 29. Dieses weist zwei Getriebestangen 36, 37 auf, die die entsprechenden Lagerungen 38, 39 an der Gestellplatte 14 schwenkgelagert sind. Das Parallelkurbelgetriebe 29 weist zwei weitere Getriebestangen 40, 41 auf, wobei die Getriebestange 40 über die Lagerungen 42, 43 an beiden Enden der Getriebestangen 36, 37 schwenkgelagert ist sowie mit dem anderen Ende über eine Lagerung 44 an der Tragplatte 28 schwenkgelagert ist. Die zweite weitere Getriebestange 41 ihrerseits ist mit der Verbindungsstange 35 verbunden und über eine Lagerung 45 mit der Getriebestange 37 gekoppelt, während das andere Ende der weiteren Getriebestange 41 über ein Führungselement 46 in eine bogenförmige Führung 47 an der Gestellplatte 14 eingreift. Das Führungselement 46 kann beispielsweise als Rolle oder Gleitführung ausgebildet sein.

Eine zweite bogenförmige Führung 48 ist an der Gestellplatte 14 am anderen Ende vorgesehen, siehe Fig. 6, in die wiederum ein geeignetes Führungselement 49, beispielsweise wiederum eine Rolle oder dergleichen, die mit der Tragplatte 28 gekoppelt ist, eingreift.

Wird die Kurbel 32 und damit die Stelleinrichtung 30 betätigt, so kommt es aufgrund der Parallelkurbelgetriebekopplung zu einem Verschwenken der Tragplatte 28 und damit der gesamten Halteeinrichtung 21 um die Schwenkachse 27, wie Fig. 7 exemplarisch zeigt, worüber die seitliche Ausblasrichtung der Brennerlanze 2 variiert wird.

Anstelle der Kurbel 32 (und gegebenenfalls vorgesehener weiterer manuell zu betätigender, eine Linearbewegung erwirkender Handhabungselemente) kann auch jeweils eine Werkzeugaufnahme, z.B. ein Sechskantkopf, vorgesehen sein, an dem mit einem Werkzeug zum Verdrehen angegriffen werden kann.

Dabei stehen bevorzugt die Horizontalachse und die Vertikalachse 27 orthogonal aufeinander und kreuzen einander in einem definierten Schnittpunkt, der möglichst nahe zur Ebene der Dichtplatte liegt, was dazu führt, dass die Relativbewegung des Kopfes 50 der Brennerlanze 2 trotz Vertikal- und Horizontalverstellung relativ zur Dichtplatte 6 nur sehr gering ist.

Eine solche Dichtplatte 6 ist in Fig. 8 gezeigt. Sie umfasst den eigentlichen an der Ofenwand anliegenden Plattenkörper 51, der im gezeigten Beispiel eine Rippenstruktur 52 aufweist, was der verbesserten Kühlung dient, nachdem eine beispielsweise in Fig. 3 nur dem Grunde nach angedeutete Kühleinrichtung 81, beispielsweise ein entsprechendes Kühlluftrohr, in den Bereich der Dichtplatte 6 geführt ist.

Die Dichtplatte 6 weist die bereits beschriebene Durchbrechung 7 auf, die an der zur Brennerlanze 2 weisenden Seite eine kalotten- oder kugelringförmige Aufnahme 53 für den ebenfalls kalotten- oder kugelförmigen Kopf 50 aufweist.

An den beiden Seiten des Plattenkörpers 51 stehen zwei längliche Arme 54 ab, die im gezeigten Beispiel jeweils eine Durchbrechung 55 aufweisen, die der Aufnahme eines Befestigungselements dienen, über das die Dichtplatte 6 mit dem Festgestell 8 respektive dessen Gestellarmen 10 verbunden wird.

Vorgesehen sind des Weiteren zwei seitlich vorspringende Stützarme 56, die jedoch ersichtlich deutlich kürzer sind als die Arme 54. An den Stützarmen 56 stehen zwei kurze Stützzapfen 57 zur Seite hin ab. Diese Stützzapfen 57 sind in der Montagestellung in entsprechenden hakenförmigen Aufnahmen, die bevorzugt endseitig an den Gestellarmen 10 des Festgestells 8 vorgesehen sind, eingesetzt und aus ihnen im Rahmen einer zur Einsetzbewegung entgegengerichteten linealen Schiebebewegung auch wieder entnehmbar. Über sie wird der Kopf 50 der Brennerlanze 2 nach Festziehen der Befestigung der Dichtplatte 6 am Festgestell 8 positionsmäßig in der Aufnahme 53 festgelegt. Die Ausgestaltung der Dichplatte 6 mit den Stützarmen 57 mit den festgestellseitigen Aufnahmen 60, in die die Stützzapfen 57 eingreifen, ist jedoch optional, also nicht unbedingt erforderlich.

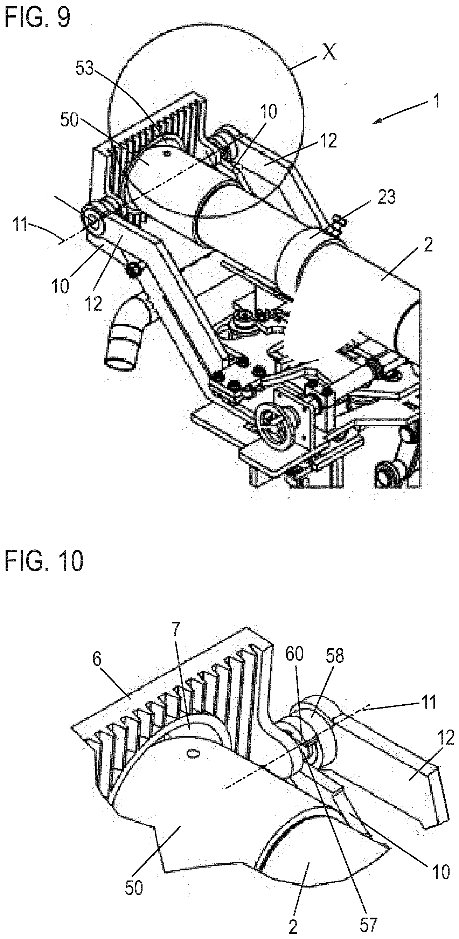

Diese Anordnung zeigen die Figuren 9 und 10. In Fig. 9 ist eine Teilansicht der Halterung 1 gezeigt, wobei hier die Brennerlanze 2 mit ihrem Kopf 50 in die Aufnahme 53 eingreift. Die Brennerlanze 2 ist über den Haltering 23 in dieser Position fixiert, der Kopf 50 liegt an der Dichtplattenaufnahme an. Aufgrund der kalotten- oder kugelringförmigen Ausgestaltung der Aufnahme 53 und des Kopfes 50 ist eine Verschwenkung um die benachbart zum Haltekörper 51 verlaufende Horizontal- und Vertikalachse 11, 27 innerhalb der Aufnahme 53 möglich.

Die Horizontalachse 11, die in den Fig. 9 und 10 gezeigt ist, ist ausschließlich zwischen den Gestellarmen 10 des Festgestells und den Gestellarmen 12 des Schwenkgestells ausgebildet. Hierzu ist im gezeigten Beispiel an jedem Gestellarm 10 eine Gewindebuchse 58 befestigt, die seitlich von dem jeweiligen Schwenkarm 12 übergriffen ist, der eine entsprechende Durchbrechung aufweist, in die ein Achsbolzen 59 eingeschraubt ist, der die Schwenkachse 11 bildet. Das heißt, dass die Schwenkverbindung ausschließlich zwischen den beiden Gestellarmen 10, 12 respektive zwischen dem Gestellarm 12 und der Gewindebuchse 58 realisiert ist.

Die beiden Enden der Gestellarme 10 des Festgestells weisen zwei hakenförmige Aufnahmen 60 auf, in denen, siehe Fig. 10, die Stützzapfen 57 der Dichtplatte 6 eingesetzt sind. Die hakenförmigen Aufnahmen 16 sind zur Brennerlanze 2 hin offen, das heißt, dass die Stützzapfen 57, wenn die Brennerlanze 2 nicht montiert ist, durch eine Schiebebewegung in Richtung der Ofenwand in die hakenförmigen Aufnahmen 60 eingeschoben und zur Demontage auch wieder herausgeschoben werden können.

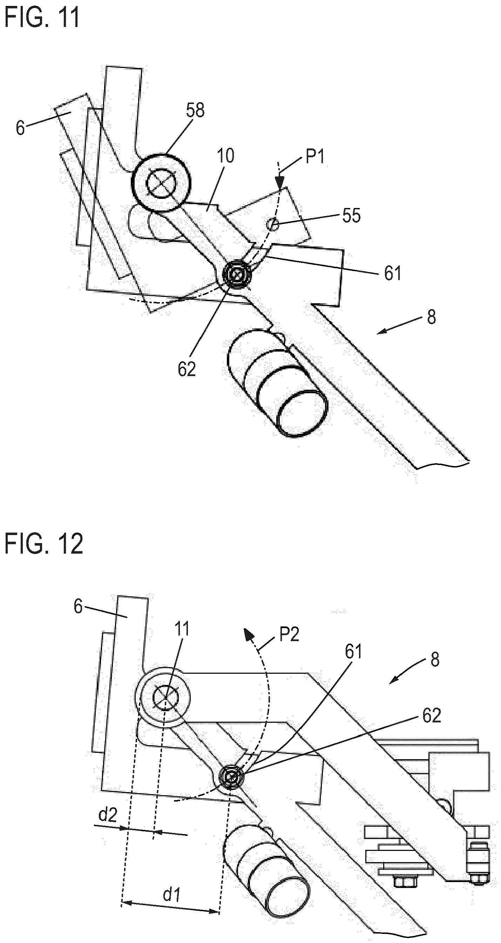

Die Fig. 11 und 12 zeigen zwei Prinzipdarstellungen in jeweiligen Seitenansichten zur Montage der Dichtplatte 6 am Festgestell 8 respektive den Gestellarmen 10 (siehe Fig. 11) respektive zur Veränderung der Orientierung der Dichtplatte 6 relativ zum Festgestell 8 (siehe Fig. 12). In Fig. 11 ist lediglich exemplarisch die eine Gewindebuchse 58 gezeigt, hinter welcher quasi die entsprechende hakenförmige Aufnahme 60 ausgebildet ist, in die der entsprechende Stützzapfen 57 eingeschoben wurde, die andere Gewindbuchse beziehungsweise Halterungsseite ist hier nicht sichtbar. Nun wird, siehe Fig. 11, wie durch den Pfeil P1 dargestellt die Dichtplatte 6 nach unten geschwenkt, bis die Durchbrechung 55 in den Bereich eines einseitig offenen Langlochs 61, das im Gestellarm 10 ausgebildet ist, einläuft. Die Befestigung erfolgt nun mittels eines Befestigungselements 62, beispielsweise einer Schraubverbindung mit einem Gewindebolzen oder einer Schraube und einer Mutter, die einerseits durch das Langloch 61, andererseits durch die Durchbrechung 55 geführt wird. In der gewünschten Endstellung wird diese Schraubverbindung beidseits gesetzt und fixiert, so dass die Dichtplatte 6 fest mit dem Festgestell 8 verbunden ist.

Da es sich um ein gebogenes Langloch 61 handelt, besteht die Möglichkeit, die Ausrichtung der Dichtplatte 6 beziehungsweise des Plattenkörpers 51 geringfügig zu variieren, um sich einer etwaigen Abweichung der Orientierung der Ofenwand 4 relativ zur Stahlträgerkonstruktion 3 anpassen zu können. Denn es ist möglich, die Lage der Befestigungs- oder Verbindungselemente 62 in dem Langloch 61 zu variieren, es also mithin im Bereich des unteren Endes oder im Bereich des oberen Endes anzuordnen, worüber die Orientierung verändert werden kann. Dies ist in Figur 12 gezeigt, wobei über den Pfeil P2 auch dargestellt wird, dass zum Entfernen der Dichtplatte 6 wiederum auf einfache Weise durch Verschwenken die gelockerten oder gelösten Befestigungselemente 62 aus dem Langloch 61 herausgeschwenkt werden, wonach die Dichtplatte 6 durch einfaches Schieben der Stützzapfen 57 aus den hakenförmigen Aufnahmen 60 abgezogen werden kann.

Die vorstehenden Figuren und insbesondere die Fig. 11 und 12 zeigen deutlich, dass die Horizontalachse 11 sehr nahe benachbart zur Dichtplatte 6 angeordnet ist, während die Befestigungselemente 62, siehe insbesondere Fig. 12, aber auch Fig. 4, deutlich von der Dichtplatte 6 beabstandet sind. Das heißt, dass der Abstand d1 der einen oder der hier gezeigten beiden, auf einer Linie liegenden Befestigungselemente 62, gesehen längs der Senkrechten auf die Ebene des Plattenkörpers 51, größer ist als der Abstand d2 der Horizontalachse 11 gesehen längs der Senkrechten auf die Ebene des Plattenkörpers 51. Darüber hinaus sind die Befestigungselemente 62 die einzigen Befestigungselemente, über die die Dichtplatte 6 fest mit dem Festgestell 8 verbunden ist. Diese Befestigungspositionen respektive die Befestigungselemente 62 sind entfernt von der Horizontalschwenkverbindung angeordnet, die ausschließlich zwischen den Gestellarmen 10 und 12 des Festgestells 8 und des Schwenkgestells 13 ausgebildet ist. Dies hat eine Reihe von Vorteilen.

Zum einen befinden sich die Befestigungselemente 62 deutlich beabstandet von der Dichtplatte 6 selbst respektive von dem Plattenkörper 51, was dazu führt, dass sie kühler sind als der Plattenkörper 51 selbst, der sich im Betrieb natürlich, da direkt an der Ofenwand 4 angeordnet, entsprechend erwärmt. Das heißt, dass es möglich ist, die Befestigungselemente 62 zu öffnen, auch wenn die Dichtplatte 6 respektive der Plattenkörper 51 heiß ist.

Darüber hinaus ist insbesondere bei der Ausgestaltung mit dem offenen Langloch 61 kein vollständiges Lösen der Befestigungselemente 62, also der Schraubverbindungen, erforderlich, vielmehr können diese lediglich leicht aufgeschraubt werden, woraufhin sie aus den offenen Langlöchern 61 herausgeschwenkt werden können.

Und schließlich ist, nachdem die Befestigungspositionen und die Schwenklagerungen der Horizontalachse 11 auseinander fallen, es nur erforderlich, die beiden Befestigungselemente 62 zu lösen, woraufhin die Dichtplatte 6 vollständig entfernt werden kann. Die Öffnung der Schwenkverbindung oder die Demontage von Festgestell oder Schwenkgestell voneinander, wie im Stand der Technik erforderlich, sind hier mit besonderem Vorteil nicht mehr erforderlich, da die Dichtplatte 6 nicht mit beiden Gestellen in der Horizontalschwenkachse verbunden ist, wie im Stand der Technik aber der Fall. Denn aufgrund der erfindungsgemäßen Entkopplung der horizontalen Schwenklagerung und der Befestigung ist zum Austausch der Dichtplatte 6 lediglich die Befestigung über die Befestigungselemente 62 zu lösen, was keinerlei Einfluss auf die Horizontalschwenklagerung hat. Insbesondere hat dies auch keinerlei Einfluss auf die sonstige Einstellung der Halterung 1, sowohl was die Vertikalverschwenkung als auch die Horizontalverschwenkung angeht. Denn die Befestigungselemente 62 sind stets auf einfache Weise zugänglich, und zwar unabhängig davon, in welcher Vertikalposition die beiden Gestelle 8, 13 zueinander verschwenkt sind, siehe Fig. 5, wo ersichtlich ist, dass stets Zugriff zu den Befestigungselementen 62 gegeben ist. Darüber hinaus hindert auch die entsprechende Horizontalverschwenkung der Halteeinrichtung 22 relativ zum Schwenkgestell 13 das Lösen der Befestigungselemente 62 in keiner Weise respektive ist eine Änderung dieser Horizontalverschwenkung für das Lösen erforderlich. Das heißt, dass eine gewählte Einstellung für die Demontage und die Neumontage einer Dichtplatte 6 in keiner Richtung zu ändern ist. Es ist lediglich erforderlich, die Brennerlanze 2 abzubauen und nach Ansetzen der Dichtplatte 6 wieder zu montieren.

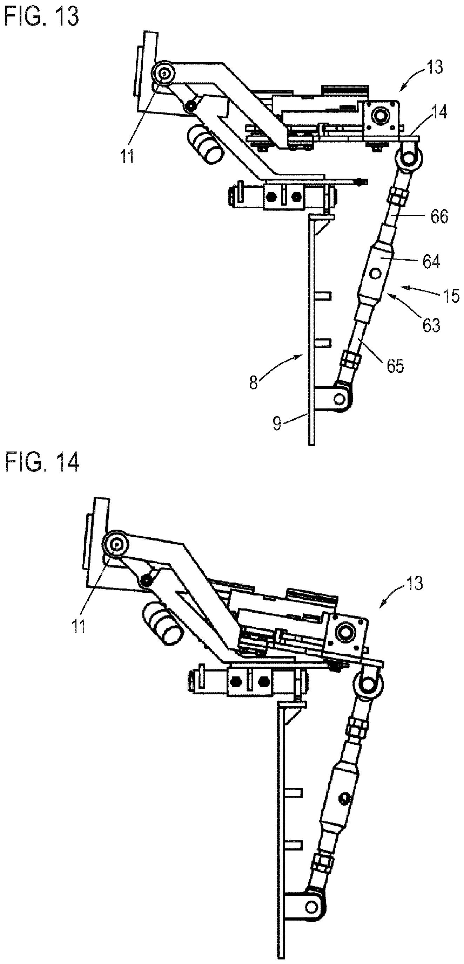

Die vorstehenden Figuren, insbesondere die Fig. 4 und 5, zeigen eine erste Ausführungsform der ersten Stelleinrichtung 15 unter Verwendung einer Schubkurbel 16. Dem gegenüber zeigen die Fig. 13 und 14 eine zweite Ausgestaltung einer ersten Stelleinrichtung 15 unter Verwendung eines Spannschlosses 63. Dieses umfasst eine Spannschlossmutter 64 sowie zwei mit Gewinden unterschiedlicher Richtung versehene Gewindebolzen 65, 66, auf denen die Spannschlossmutter 64 läuft. Die Gewindebolzen 65, 66 sind wiederum gelenkig mit dem Festgestell 8 respektive dem Gestellbefestigungsteil 9 einerseits sowie dem Schwenkgestell 13 respektive der Gestellplatte 14 andererseits verbunden. Wird die Spannschlossmutter 64 in die eine oder andere Richtung gedreht, so werden die Gewindebolzen 65, 66 näher zueinander gezogen oder auseinander geschoben. Ausgehend von Fig. 13 wird die Spannschlossmutter 64 so gedreht, dass die Gewindebolzen näher zueinander gezogen werden, siehe Fig. 14, was dazu führt, dass das Schwenkgestell 13 nach unten um die Horizontalachse 11 geschwenkt wird.

Während das Betätigen der Schubkurbel 16 respektive des Spannschlosses 63, wie beschrieben, manuell erfolgen kann, ist es gleichermaßen denkbar, die Betätigung auch automatisiert beispielsweise über einen Elektromotor oder dergleichen, der die Gewindespindel 18 im Falle der Schubkurbel 16 oder die Spannschlossmutter 64 im Falle des Spannschlosses 63 dreht, erfolgen.

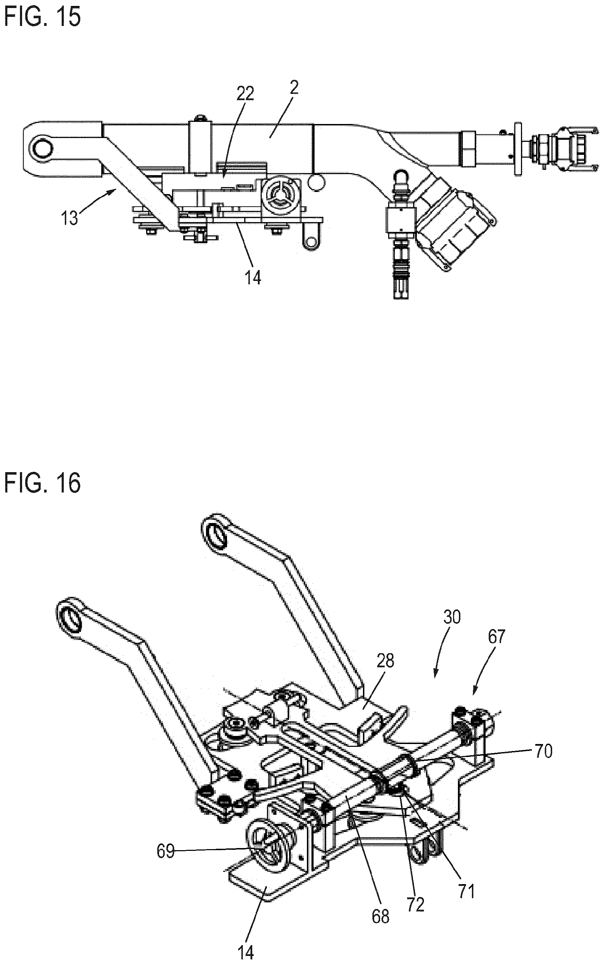

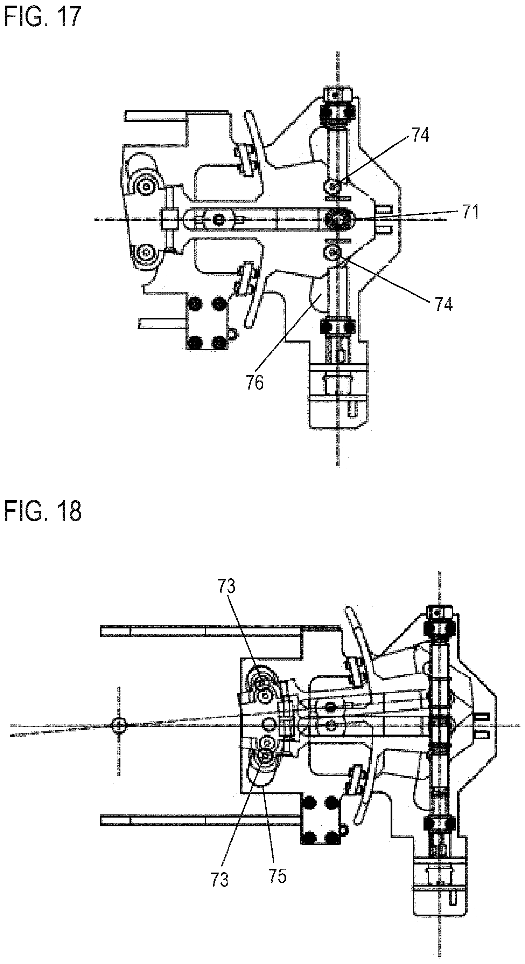

Die Fig. 15-18 zeigen eine zweite Variante einer zweiten Stelleinrichtung 30, umfassend einen Spindeltrieb 67, der an der Gestellplatte 14 des Schwenkgestells 13 angeordnet ist. Der Spindelrieb 67 umfasst eine Gewindespindel 68, die über eine Kurbel 69 gedreht werden kann. Auf ihr läuft eine Spindelmutter 70, die mit einem Mitnehmer 71 in eine entsprechende langlochartige Durchbrechung 72 an der Tragplatte 28 der Halteeinrichtung 22 eingreift und über diesen mit der Halteeinrichtung gekoppelt ist. Die Tragplatte 22 und damit die Halteinrichtung 22 ihrerseits ist über entsprechende Führungselemente 73 respektive 74 in entsprechenden, bogenartigen Führungen 75, 76, die an der Gestellplatte 14 ausgebildet sind, geführt, wobei die Führungselemente 73, 74 beispielsweise Rollen oder Gleitführungselemente sein können.

Die Verschwenkung erfolgt nun derart, dass über die Kurbel 69 die Gewindespindel 68 gedreht wird, so dass die Spindelmutter 70 längs der Gewindespindel wandert. Durch den Mitnehmereingriff wird hierbei die Tragplatte 28 und mit ihr die Halteeinrichtung 22 um die Vertikalachse 27 verschwenkt, geführt über den Eingriff der Führungselemente 73, 74 in die bogenförmigen Führungen 75, 76. Auch dieser Verstellmechanismus kann elektrisch oder pneumatisch automatisiert werden, ebenso wie der in der Fig. 6 gezeigte Spindeltrieb 31 zur Bewegung des Parallelkurbelgetriebes 29.

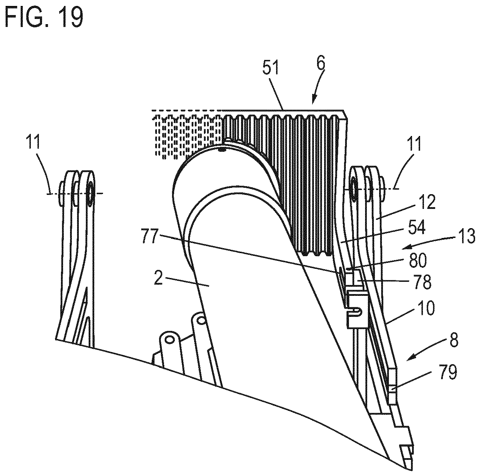

Fig. 19 zeigt schließlich eine Variante der Befestigung der Dichtplatte 6 an dem Festgestell 8 respektive den beiden Gestellarmen 10. Auch bei dieser Erfindungsausgestaltung sind, siehe Fig. 19, ausschließlich das Festgestell 8 und das Schwenkgestell 13 im Bereich ihrer Gestellarme 10, 12 unter Bildung der Horizontalachse 11 miteinander verbunden, wie Fig. 19 deutlich zeigt.

Die Dichtplatte 6 weist auch hier zwei vom Plattenkörper 51 abstehende Arme 54 auf, wobei jeder Arm 54 endseitig einen zum Armende offenen Schlitz 77 aufweist. In diesen Schlitz greift ein Nutstein 78, der in einer am jeweiligen Gelenkarm 10 ausgebildeten Nut 79 längsverschiebbar aufgenommen ist. Der Nutstein 78 ist über ein jeweiliges Befestigungselement 80 in der Eingriffstellung fest mit dem jeweiligen Arm 54 verbunden, sowie in der Montageendstellung über ein nicht näher gezeigtes Befestigungselement in seiner Position in der Nut 79 am Gestellarm 10 festgelegt, üblicherweise natürlich jeweils verschraubt.

Soll die Dichtplatte 6 entfernt werden, so wird nach Entfernung der Brennerlanze 2 einerseits die Verbindung von Dichtplatte 6 zum Nutstein 78, also das jeweilige Befestigungselement 80 gelöst, zum anderen wird die Fixierung des jeweiligen Nutsteins 78 in der Nut 79 respektive am Gelenkarm 10 gelöst, so dass der Nutstein 78 entlang der Nut 79 von der Dichtplatte 6 weggeschoben werden kann, wobei er aus dem Schlitz 77 bewegt wird. Sobald jeder Nutstein 78 aus dem Schlitz 77 bewegt ist, kann die Dichtplatte 6 entnommen werden. Im Rahmen der Montage erfolgt der Vorgang andersherum, hier wird jeder Nutstein 78 in der Nut 79 verschoben und in den Schlitz 77 eingeschoben, woraufhin die entsprechenden Befestigungen wieder angezogen werden.

Auch bei dieser Ausgestaltung kragen die Arme 54 weit von dem Plattenkörper 51 weg, das heißt, dass die Befestigungsposition über den Nutstein 78 folglich beabstandet von der Dichtplatte 6 respektive dem Plattenkörper 51 liegt, wobei wiederum die Horizontalachse 11 auch bei dieser Ausgestaltung sehr eng benachbart zum Plattenkörper 51 verläuft. Längs der Senkrechten auf die Ebene des Plattenkörpers 51 gesehen ist also auch hier die Verbindungsposition der Dichtplatte 6 mit dem Festgestell 8 über die Nutsteine 78 deutlich weiter vom Plattenkörper 51 beabstandet als die Horizontalachse 11. Dies führt wiederum dazu, dass die Nutsteinverbindung auch bei heißem Plattenkörper 51 gelöst werden kann. Darüber hinaus ist auch hier keinerlei Demontage im Bereich der Schwenkverbindung der beiden Gestelle 8, 13 oder sonstiger Anbauteile erforderlich, da der Dichtplattenaustausch lediglich durch Lösen der Nutsteinverbindungen vonstattengehen kann.

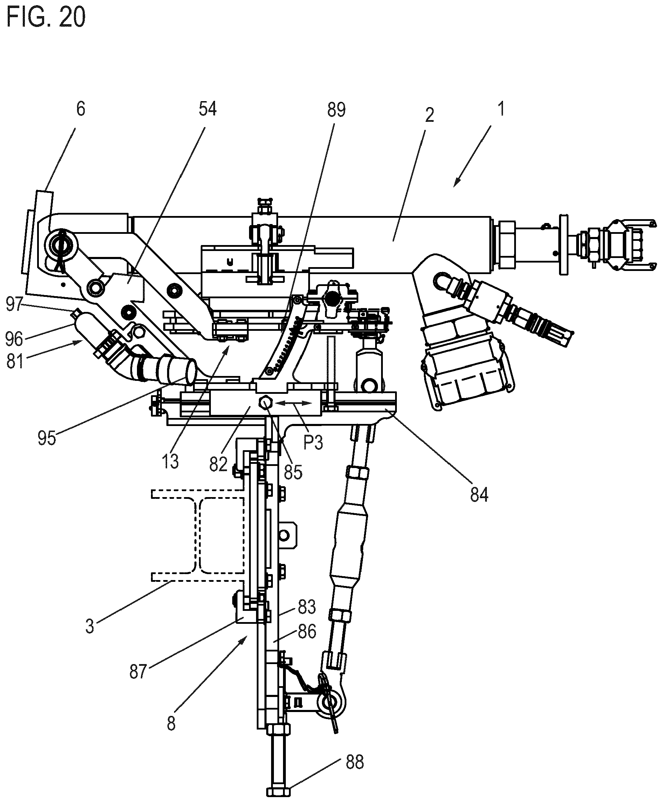

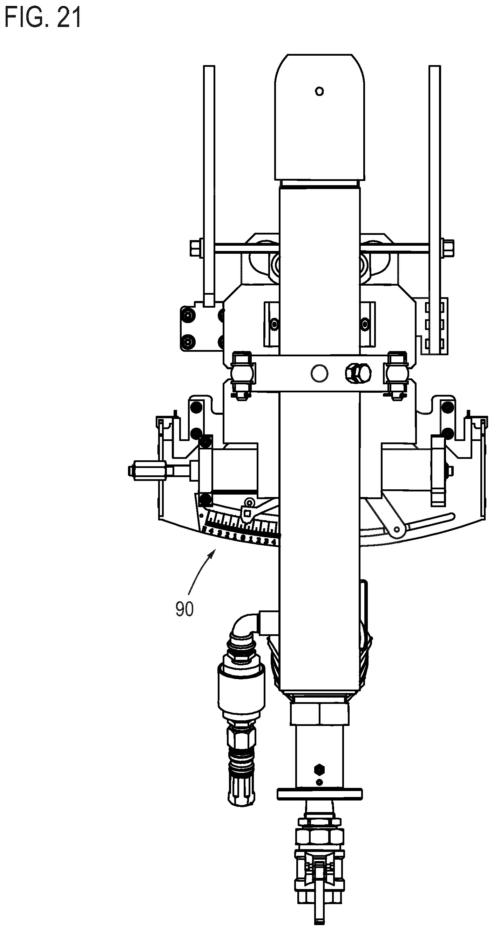

Die Fig. 20 und 21 zeigen ein weiteres Ausführungsbeispiel einer erfindungsgemäßen Halterung 1, wobei für vergleichbare Bauteile gleiche Bezugszeichen verwendet werden. Der Aufbau entspricht im Wesentlichen der Halterung der vorstehend beschriebenen Ausgestaltung. Auch sie dient der Halterung einer Brennerlanze 2 eines Gasbrenners, die mit ihrer Spitze an einer Dichtplatte 6 der Halterung 1 wie beschrieben angeordnet ist. Vorgesehen ist auch hier wiederum ein Festgestell 8, an dem wiederum ein Schwenkgestell 13, das der Verschwenkung der Brennerlanze 2 um eine Horizontalachse und um eine Vertikalachse dient, angeordnet ist.

Bei dieser Ausgestaltung sind am Festgestell 8 zwei Schlitten vorgesehen sind, nämlich ein erster, eine Horizontalverschiebung ermöglichender Schlitten 82 sowie ein zweiter, eine Vertikalverschiebung ermöglichender Schlitten 83. Der Schlitten 82 ist auf einer horizontal angeordneten Führungsplatte 84 horizontal in beide Richtungen, wie durch den Pfeil P3 dargestellt, linear verschiebbar geführt. Hierüber kann demzufolge die horizontale Ausrichtung der Brennerlanze 2 relativ zur Ofenwand eingestellt werden. Auf dem plattenförmigen Schlitten 82 ist das Schwenkgestell 13 sowie die Dichtplatte 6 angeordnet, wobei die Dichtplatte 6 mit ihren Armen 54 am Schlitten 82 befestigt ist.

Der Schlitten 82 ist bevorzugt manuell horizontal zu verschieben, in seiner gewünschten Position kann er über ein Feststellelement 85, z. B. eine Schraube oder dergleichen arretiert werden.

Der Schlitten 83 ist in Form einer vertikal angeordneten Schlittenplatte 86 gebildet, die wiederum auf einer Montageplatte 87, über die die Befestigung der gesamten Halterung 1 an der Stahlträgerkonstruktion 3 erfolgt, vertikal und linear verschiebbar geführt ist. Über diese Schlittenplatte 86 wird der gesamte Halterungsaufbau vertikal bewegt, kann also vertikal entsprechend angehoben oder abgesenkt werden und demzufolge ausgerichtet werden.

Da hierbei ein entsprechendes Gewicht anzuheben oder abzusenken ist, erfolgt die Verschiebung bevorzugt automatisch, wozu ein entsprechender Anschlussabschnitt 88 für ein elektrisches oder pneumatisches Antriebsmittel vorgesehen ist, über das beispielsweise ein nicht näher gezeigter Spindeltrieb, der der Vertikalverstellung dient, angetrieben wird.

Während also die Halterung 1 über die Montageplatte 87 grundsätzlich fest an der Stahlträgerkonstruktion 3 fixiert ist, kann die Brennerlanze 2 samt Dichtplatte 6 über die vertikale und horizontale Verstellmöglichkeit über die beiden Schlitten 82, 83 auf einfache Wiese exakt bezüglich der Ofenöffnung positioniert werden. Die jeweilige horizontale und vertikale Verschwenkbarkeit ermöglicht sodann die entsprechende Einstellung des erforderlichen Winkels.

Die beiden Schlitten 82, 83 können rollengeführt an den jeweiligen Linearführungen, also der Führungsplatte 84 respektive der Montageplatte 87, angeordnet sein, sodass ein einfaches, leichtlaufendes Verstellen möglich ist. Bevorzugt jedoch sind Gleitführungen vorgesehen, die beispielsweise über Messinggleitscheiben oder Ähnliches realisiert sind, und die ebenfalls eine sehr einfache Linearführung bieten. Der Vorteil besteht darin, dass diese Gleitführungen keine Wälzlager, wie Rollenführungen, aufweisen, welche Wälzlager der Schmierung bedürfen, was bei den hohen Temperaturen im Bereich der Ofenaußenwand mitunter problematisch sein kann. Die Gleitlagerungen oder Gleitführungen, insbesondere auf Basis der Messinggleitscheiben, bedürfen letztlich keiner Schmierung.

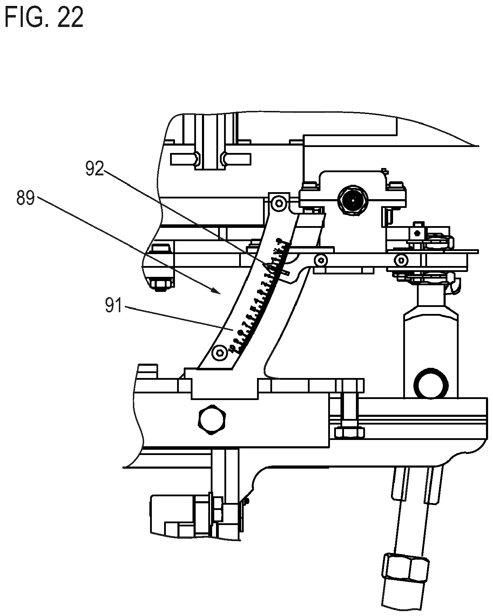

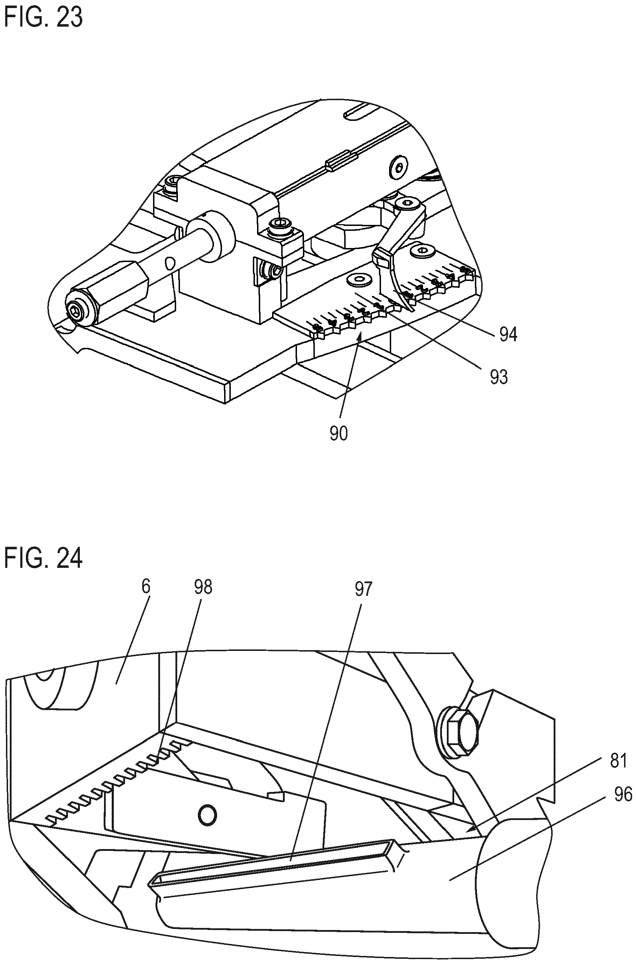

Um die entsprechenden vertikalen und horizontalen Schwenkwinkel der Brennerlanze 2 exakt einstellen zu können, was über die horizontale und vertikale Verschwenkbarkeit der Brennerlanze 2, wie vorstehend bereits zur ersten Ausführungsform beschrieben wurde, möglich ist, sind zwei Anzeigemittel 89, 90 vorgesehen, die der Anzeige des eingestellten vertikalen und horizontalen Ist-Schwenkwinkels dienen. Die Fig. 22 und 23 zeigen vergrößerte Darstellungen der beiden Anzeigemittel 89 und 90.

Fig. 22 zeigt das Anzeigemittel für die Vertikalverstellung. Vorgesehen ist eine eine Winkelmaßangabe aufweisende, plattenförmige Anzeige 91, die positionsfest ist, und der ein beim Verschenken um die Horizontalachse mitbewegter Zeiger 92 zugeordnet ist, der auf den entsprechend eingestellten Winkelwert zeigt. Der Anwender kann hierüber auf einfache Weise den eingestellten Schwenkwinkel ablesen.

In ähnlicher Weise ist das der Anzeige des horizontalen Schwenkwinkels dienende Anzeigemittel 90 ausgeführt. Auch dieses weist eine eine Winkelmaßangabe aufweisende, plattenförmige Anzeige 93 auf, die wiederum positionsfest relativ zu den um eine vertikale Schwenkachse verschwenkbaren Komponenten der Halterung 1 ist. Vorgesehen ist wiederum ein Zeiger 94, der mit den um die Vertikalachse verschwenkten Komponenten bewegt wird, und der wiederum auf die entsprechende Winkelmaßzahl, die eingestellt ist, zeigt. Auch hier kann auf einfache Weise eine Ablesung erfolgen.

Wie bereits vorstehend beschrieben, ist die Möglichkeit gegeben, eine Kühleinrichtung 81 vorzusehen. Eine solche ist im Detail bei der in den Fig. 20, 21 gezeigten Ausgestaltung vorgesehen. Es handelt sich um eine Luftkühleinrichtung, die einen entsprechenden Anschlussabschnitt 95 aufweist, an den eine entsprechende, der Kühlluftzuführung dienende Leitung angeschlossen werden kann. Die Kühleinrichtung 81 umfasst ein Ausblaselement 96, das im Detail in Fig. 24 gezeigt ist, und das als Schlitzdüse 97 ausgeführt ist respektive eine solche aufweist. Die Breite der Schlitzdüse 97 entspricht bevorzugt mindestens der Breite der Dichtplatte 6, die unmittelbar benachbart zum Ausblaselement 96 angeordnet ist, wie Fig. 20 zeigt. Auf diese Weise kann die Kühlluft entsprechend aufgefächert und direkt auf die Dichtplatte 6 geblasen werden, um diese zu kühlen. Dabei ist es denkbar, dass an der angeströmten, von der Ofenwand wegweisenden Seite der Dichtplatte 6 vertikal verlaufende Kühlrippen 98 vorgesehen sind, siehe Fig. 24, die eine vergrößerte Kühlfläche definieren, sodass ein effizienter Wärmeabtransport und damit eine effiziente Kühlung möglich ist. Eine solche Struktur mit längslaufenden Rippen ist exemplarisch auch bereits in Fig. 19 gezeigt.

Wie beschrieben, ist die Brennerlanze 2 sowohl um eine Vertikalachse also um eine Horizontalachse über das entsprechende Schwenkgestell 13 verstellbar. Um die gewünschte Verstellposition zu arretieren, ist zweckmäßigerweise ein geeignetes Arretiermittel vorgesehen, das, wenngleich nicht näher gezeigt, beispielsweise als einfache Klemmschraube ausgeführt sein kann, die eine Verklemmung im Bereich einer Führung zweier relativ zueinander beweglicher Bauteile ermöglicht, sodass in Folge der Verklemmung eine Positionsfixierung erfolgt.

## Patentansprüche

1. Halterung für eine Brennerlanze (2) eines Gasbrenners, umfassend eine zur Anordnung an einer Schmelzvorrichtung (4) eingerichtete, eine Durchbrechung (7) aufweisende Dichtplatte (6), an der ein Kopf (50) der Brennerlanze (2) anliegt, ein für eine positionsfeste Anordnung an der Schmelzvorrichtung (4) eingerichtetes Festgestell (8) und ein an diesem um eine benachbart zur Dichtplatte (6) verlaufende Horizontalachse (11) schwenkbar gelagertes Schwenkgestell (13), an dem eine um eine Vertikalachse (27) schwenkbare Halteeinrichtung (22) für die Brennerlanze (2) angeordnet ist, wobei die Dichtplatte (6) wenigstens einen sich zum Festgestell (8) erstreckenden Arm (54) aufweist, über den die Dichtplatte (6) mittels eines Befestigungselements (62) mit dem Festgestell (8) verbunden ist, **dadurch gekennzeichnet, dass** das Befestigungselement (62) von der Dichtplatte (6) weiter entfernt angeordnet ist als die Horizontalachse (11).

2. Halterung nach Anspruch 1, **dadurch gekennzeichnet, dass** zwei parallele Arme (54) vorgesehen sind, die jeweils über ein Befestigungselement (62) mit dem Festgestell (8) verbunden sind.

3. Halterung nach Anspruch 1 oder 2, **dadurch gekennzeichnet, dass** an dem oder jedem Arm (54) eine erste Durchbrechung (55) und am Festgestell (8) eine oder jeweils eine zweite Durchbrechung (61) vorgesehen ist, die von dem als Schraubverbindung ausgeführten Befestigungselement (62) durchgriffen sind.

4. Halterung nach Anspruch 3, **dadurch gekennzeichnet, dass** die erste oder die zweite Durchbrechung als bogenförmiges Langloch (61) ausgeführt ist, während die zweite oder die erste Durchbrechung als Bohrung (55) ausgeführt ist.

5. Halterung nach Anspruch 4, **dadurch gekennzeichnet, dass** das Langloch (61) an einer Seite offen ist.

6. Halterung nach einem der vorangehenden Ansprüche, **dadurch gekennzeichnet, dass** an der Dichtplatte (6) zwei Stützarme (56) zum Festgestell (8) hin abstehen, an denen zwei Stützzapfen (57) angeordnet sind, die in jeweils eine senkrecht zur Horizontalachse (11) offene Aufnahme (60) am Festgestell (8) eingelegt sind.

7. Halterung nach Anspruch 6, **dadurch gekennzeichnet, dass** das Festgestell (8) zwei Gestellarme (10) aufweist, durch die die Horizontalachse (11) läuft und die die hakenförmigen Aufnahmen (60) aufweisen.

8. Halterung nach Anspruch 1 oder 2, **dadurch gekennzeichnet, dass** an dem oder den Armen (54) der Dichtplatte (6) ein an einer Seite offener Schlitz (77) vorgesehen ist, in den ein in einer an einem Gestellarm (10) des Festgestells (8) ausgebildeten Nut (79) geführter Nutstein (78), der über ein Befestigungselement mit dem Arm (54) verbunden ist, eingreift.

9. Halterung nach einem der vorangehenden Ansprüche, **dadurch gekennzeichnet, dass** das Festgestell (8) und das Schwenkgestell (13) jeweils zwei Gestellarme (10, 12) aufweisen, die einander endseitig übergreifen, wobei im Übergriffsbereich die Horizontalachse (11) vorgesehen ist.

10. Halterung nach einem der vorangehenden Ansprüche, **dadurch gekennzeichnet, dass** eine erste Stelleinrichtung (15) vorgesehen ist, die das Festgestell (8) und das Schwenkgestell (13) koppelt und zum Verschwenken des Schwenkgestells (13) relativ zum positionsfesten Festgestell (8) um die Horizontalachse (11) eingerichtet ist.

11. Halterung nach Anspruch 10, **dadurch gekennzeichnet, dass** die Stelleinrichtung (15) ein Spannschloss (63) aufweist, umfassend eine Spannschlossmutter (64) und zwei Gewindebolzen (65, 66) mit unterschiedlicher Gewinderichtung, von denen einer mit dem Festgestell (8) und der andere mit dem Schwenkgestell (13) gekoppelt ist, oder dass die Stelleinrichtung ein elektrisch oder pneumatisch arbeitender Antrieb ist oder einen solchen umfasst.

12. Halterung nach Anspruch 10, **dadurch gekennzeichnet, dass** die Stelleinrichtung (15) eine Schubkurbel (16) aufweist, umfassend eine positionsfeste, drehbare Gewindespindel (18), auf der eine Spindelmutter läuft, die mit wenigstens einer Schubstange (20) oder einem Schubrohr verbunden ist, das über eine Gelenkstrebe (21) gelenkig mit dem Schwenkgestell (13) verbunden ist.

13. Halterung nach Anspruch 11 oder 12, **dadurch gekennzeichnet, dass** die Spannschlossmutter (64) manuell oder mittels eines elektrischen oder pneumatischen Antriebsmittels drehbar ist, oder dass die Gewindespindel (18) über eine manuelle Kurbel (17) oder mittels eines elektrischen oder pneumatischen Antriebsmittels drehbar ist.

14. Halterung nach einem der vorangehenden Ansprüche, **dadurch gekennzeichnet, dass** das Schwenkgestell (13) eine Gestellplatte (14) aufweist, auf der die Halteeinrichtung (22) angeordnet und schwenkbar gelagert ist, wobei die Halteeinrichtung (22) über eine zweite Stelleinrichtung (30) relativ zur Gestellplatte (14) um die Vertikalachse (27) verschwenkbar ist.

15. Halterung nach Anspruch 14, **dadurch gekennzeichnet, dass** die zweite Stelleinrichtung (30) ein über einen Spindeltrieb (67) antreibbares Parallelkurbelgetriebe (29) umfasst.

16. Halterung nach Anspruch 14, **dadurch gekennzeichnet, dass** die Gestellplatte (14) eine oder zwei bogenförmige Führungen (75, 76) aufweist, in die Führungselemente (73, 74) der Halteeinrichtung (22) greifen, wobei die zweite Stelleinrichtung (30) einen Spindeltrieb (67) umfassend eine positionsfeste, drehbare Gewindespindel (68) und eine auf dieser laufende, mit der Halteeinrichtung (22) gekoppelte Spindelmutter (70) ausweist, wobei vorzugsweise die oder jede Führung (75, 76) als Durchbrechungen ausgeführt ist, in die das, insbesondere als Rolle ausgebildete, Führungselement (73, 74) eingreift.

17. Halterung nach Anspruch 16, **dadurch gekennzeichnet, dass** die Spindelmutter (70) mit einem Mitnehmer (71), der in eine Aufnahme (72) an der Halteeinrichtung (22) eingreift, gekoppelt ist, wobei vorzugsweise die Aufnahme als Durchbrechung an einer Tragplatte (28) der Halteeinrichtung (22) ausgeführt ist, in die der, insbesondere als Rolle ausgebildete, Mitnehmer (70) eingreift..

18. Halterung nach einem der Ansprüche 15 bis 17, **dadurch gekennzeichnet, dass** das Parallelkurbelgetriebe (29) oder der Spindeltrieb (67) über eine Kurbel (18, 69) manuell oder mittels eines elektrischen oder pneumatischen Antriebsmittels betätigbar ist.

19. Halterung nach einem der vorangehenden Ansprüche, **dadurch gekennzeichnet, dass** das Festgestell (8) einen horizontal beweglichen Schlitten (82) aufweist, an dem das Schwenkgestell (13) angeordnet ist und mit dem die Dichtplatte (6) über den wenigstens einen Arm (54) verbunden ist, wobei vorzugsweise der Schlitten (82) auf einer horizontalen Führungsplatte (84) des Festgestells (13) linear bewegbar geführt ist..

20. Halterung nach einem der vorangehenden Ansprüche, **dadurch gekennzeichnet, dass** das Festgestell (8) einen vertikal beweglichen Schlitten (83) aufweist, über den das Schwenkgestell (13) und die Dichtplatte (6) vertikal bewegbar ist, wobei vorzugsweise der Schlitten (83) auf einer Montageplatte (87) des Festgestells (8), über die das Festgestell (8) an der Schmelzvorrichtung (3) befestigbar ist, bewegbar ist..

21. Halterung nach Anspruch 20, und Anspruch 19, **dadurch gekennzeichnet, dass** der Schlitten (83) mittels einer Schlittenplatte (86) gebildet ist, an der die Führungsplatte (84) angeordnet ist.

22. Halterung nach einem der Ansprüche 19 bis 21, **dadurch gekennzeichnet, dass** der horizontale und/oder der vertikale Schlitten (82, 83) manuell verschiebbar und arretierbar ist, oder dass der horizontale und/oder der vertikale Schlitten (82, 83) mittels eines elektrischen oder pneumatischen Antriebsmittels verschiebbar ist.

23. Halterung nach einem der vorangehenden Ansprüche, **dadurch gekennzeichnet, dass** eine Kühleinrichtung (81) zum Kühlen der Dichtplatte (6) vorgesehen ist.

24. Halterung nach Anspruch 23, **dadurch gekennzeichnet, dass** die Kühleinrichtung (81) eine Luftkühleinrichtung ist, mit einem Ausblaselement (96), über das Kühlluft auf die Dichtplatte (6) blasbar ist, wobei vorzugsweise das Ausblaselement (96) eine Schlitzdüse (97) ist oder umfasst.

25. Halterung nach einem der vorangehenden Ansprüche, **dadurch gekennzeichnet, dass** Anzeigemittel (89, 90) zum Anzeigen der Winkeleinstellung um die horizontale und/oder die vertikale Schwenkachse vorgesehen sind.

26. Schmelzvorrichtung, insbesondere Glasschmelzwanne, umfassend wenigsten seine Halterung nach einem der vorangehenden Ansprüche zur Aufnahme einer Brennerlanze.

## Claims

1. Holder for a burner lance (2) of a gas burner, comprising a sealing plate (6) which is configured for arrangement on a melting apparatus (4) and which has an aperture (7) and against which a head (50) of the burner lance (2) bears, a fixed frame (8) which is configured for a positionally fixed arrangement on the melting apparatus (4), and a pivoting frame (13) which is mounted on said fixed frame so as to be pivotable about a horizontal axis (11) extending adjacently to the sealing plate (6) and on which a holding device (22), pivotable about a vertical axis (27), for the burner lance (2) is arranged, wherein the sealing plate (6) has at least one arm (54) which extends to the fixed frame (8) and via which the sealing plate (6) is connected to the fixed frame (8) by means of a fastening element (62), **characterized in that** the fastening element (62) is arranged so as to be further away from the sealing plate (6) than the horizontal axis (11).

2. Holder according to Claim 1, **characterized in that** provision is made of two parallel arms (54) which are each connected to the fixed frame (8) via a fastening element (62).

3. Holder according to Claim 1 or 2, **characterized in that** provision is made on the or each arm (54) of a first aperture (55) and on the fixed frame (8) of a or in each case one second aperture (61), which are passed through by the fastening element (62), which is in the form of a screw connection.

4. Holder according to Claim 3, **characterized in that** the first or the second aperture is in the form of an arcuate elongate hole (61), while the second or the first aperture is in the form of a bore (55).

5. Holder according to Claim 4, **characterized in that** the elongate hole (61) is open at one side.

6. Holder according to one of the preceding claims, **characterized in that**, on the sealing plate (6), two support arms (56) project to the fixed frame (8), on which support arms there are arranged two support pegs (57) which are inserted into in each case one receptacle (60) on the fixed frame (8) that is open perpendicular to the horizontal axis (11).

7. Holder according to Claim 6, **characterized in that** the fixed frame (8) has two frame arms (10) through which the horizontal axis (11) passes and which have the hook-like receptacles (60).

8. Holder according to Claim 1 or 2, **characterized in that**, on the arm(s) (54) of the sealing plate (6), provision is made of a slot (77) which is open at one side and into which a sliding block (78) guided in a groove (79) formed on a frame arm (10) of the fixed frame (8) engages, said sliding block being connected to the arm (54) via a fastening element.

9. Holder according to one of the preceding claims, **characterized in that** the fixed frame (8) and the pivoting frame (13) each have two frame arms (10, 12) which engage one over the other at an end side, wherein the horizontal axis (11) is provided in the over-engaging region.

10. Holder according to one of the preceding claims, **characterized in that** provision is made of a first positioning device (15) which couples the fixed frame (8) and the pivoting frame (13) and is configured for pivoting of the pivoting frame (13) about the horizontal axis (11) relative to the positionally fixed fixed frame (8).

11. Holder according to Claim 10, **characterized in that** the positioning device (15) has a turnbuckle (63) comprising a turnbuckle nut (64) and two threaded bolts (65, 66) with different thread direction, of which one is coupled to the fixed frame (8) and the other is coupled to the pivoting frame (13), or **in that** the positioning device is an electrically or pneumatically operating drive or comprises such a drive.

12. Holder according to Claim 10, **characterized in that** the positioning device (15) has a thrust crank (16) comprising a positionally fixed, rotatable threaded spindle (18), on which there runs a spindle nut, which is connected to at least one thrust rod (20) or one thrust tube connected in an articulated manner to the pivoting frame (13) via an articulated strut (21).

13. Holder according to Claim 11 or 12, **characterized in that** the turnbuckle nut (64) is rotatable manually or by means of an electric or pneumatic drive means, or **in that** the threaded spindle (18) is rotatable via a manual crank (17) or by means of an electric or pneumatic drive means.

14. Holder according to one of the preceding claims, **characterized in that** the pivoting frame (13) has a frame plate (14) on which the holding device (22) is arranged and pivotably mounted, wherein the holding device (22) is pivotable about the vertical axis (27) relative to the frame plate (14) via a second positioning device (30).

15. Holder according to Claim 14, **characterized in that** the second positioning device (30) comprises a parallel crank transmission (29) which is driveable via a spindle drive (67).

16. Holder according to Claim 14, **characterized in that** the frame plate (14) has one or two arcuate guides (75, 76) into which guide elements (73, 74) of the holding device (22) engage, wherein the second positioning device (30) has a spindle drive (67) comprising a positionally fixed, rotatable threaded spindle (68) and a spindle nut (70) which runs thereon and which is coupled to the holding device (22), wherein preferably the or each guide (75, 76) is in the form of an aperture into which the guide element (73, 74), in particular in the form of a roll, engages.

17. Holder according to Claim 16, **characterized in that** the spindle nut (70) is coupled to a driver (71) which engages into a receptacle (72) on the holding device (22), wherein preferably the receptacle is in the form of an aperture in a bearing plate (28) of the holding device (22) into which the driver (70), in particular in the form of a roll, engages.

18. Holder according to one of Claims 15 to 17, **characterized in that** the parallel crank transmission (29) or the spindle drive (67) is actuatable manually via a crank (18, 69) or by means of an electric or pneumatic drive means.

19. Holder according to one of the preceding claims, **characterized in that** the fixed frame (8) has a horizontally movable carriage (82) on which the pivoting frame (13) is arranged and to which the sealing plate (6) is connected via the at least one arm (54), wherein preferably the carriage (82) is guided linearly movably on a horizontal guide plate (84) of the fixed frame (13).

20. Holder according to one of the preceding claims, **characterized in that** the fixed frame (8) has a vertically movable carriage (83) via which the pivoting frame (13) and the sealing plate (6) are vertically movable, wherein preferably the carriage (83) is movable on a mounting plate (87) of the fixed frame (8), via which mounting plate the fixed frame (8) is fastenable to the melting apparatus (3) .

21. Holder according to Claim 20 and Claim 19, **characterized in that** the carriage (83) is formed by means of a carriage plate (86) on which the guide plate (84) is arranged.

22. Holder according to one of Claims 19 to 21, **characterized in that** the horizontal and/or vertical carriage (82, 83) is manually displaceable and arrestable, or **in that** the horizontal and/or vertical carriage (82, 83) is displaceable by means of an electric or pneumatic drive means.

23. Holder according to one of the preceding claims, **characterized in that** a cooling device (81) for cooling the sealing plate (6) is provided.

24. Holder according to Claim 23, **characterized in that** the cooling device (81) is an air-cooling device having a blow-out element (96) via which cooling air is able to be blown onto the sealing plate (6), wherein preferably the blow-out element (96) is or comprises a slot nozzle (97).

25. Holder according to one of the preceding claims, **characterized in that** indicating means (89, 90) for indicating the angular setting about the horizontal and/or vertical pivot axis are provided.

26. Melting apparatus, in particular glass-melting tank, comprising at least one holder according to one of the preceding claims for receiving a burner lance.

## Revendications

1. Support pour une lance (2) d'un brûleur à gaz, comprenant une plaque d'étanchéité (6) conçue pour être agencée sur un dispositif de fusion (4) et présentant une ouverture (7), plaque d'étanchéité contre laquelle s'appuie une tête (50) de la lance de brûleur (2), un bâti fixe (8) conçu pour être agencé en position fixe sur le dispositif de fusion (4) et un bâti pivotant (13) monté sur celui-ci de manière pivotante autour d'un axe horizontal (11) s'étendant de manière adjacente à la plaque d'étanchéité (6), bâti pivotant sur lequel est agencé un dispositif de retenue (22), pivotant autour d'un axe vertical (27), pour la lance de brûleur (2), la plaque d'étanchéité (6) présentant au moins un bras (54) s'étendant jusqu'au bâti fixe (8), bras par le biais duquel la plaque d'étanchéité (6) est reliée au bâti fixe (8) au moyen d'un élément de fixation (62), **caractérisé en ce que** l'élément de fixation (62) est agencé plus loin de la plaque d'étanchéité (6) que l'axe horizontal (11).

2. Support selon la revendication 1, **caractérisé en ce que** deux bras (54) parallèles sont prévus, lesquels sont reliés respectivement au bâti fixe (8) par le biais d'un élément de fixation (62).

3. Support selon la revendication 1 ou 2, **caractérisé en ce qu'**une première ouverture (55) est prévue sur le ou chaque bras (54) et une ou respectivement une deuxième ouverture (61) est prévue sur le bâti fixe (8), lesquelles ouvertures sont traversées par l'élément de fixation (62) réalisé sous forme de liaison vissée.

4. Support selon la revendication 3, **caractérisé en ce que** la première ou la deuxième ouverture est réalisée sous forme de trou oblong (61) en forme d'arc, tandis que la deuxième ou la première ouverture est réalisée sous forme d'alésage (55).

5. Support selon la revendication 4, **caractérisé en ce que** le trou oblong (61) est ouvert d'un côté.

6. Support selon l'une des revendications précédentes, **caractérisé en ce qu'**au niveau de la plaque d'étanchéité (6), deux bras d'appui (56) font saillie en direction du bâti fixe (8), bras sur lesquels sont agencés deux tourillons d'appui (57) qui sont insérés dans respectivement un logement (60), ouvert perpendiculairement à l'axe horizontal (11), sur le bâti fixe (8).

7. Support selon la revendication 6, **caractérisé en ce que** le bâti fixe (8) présente deux bras de bâti (10) par lesquels passe l'axe horizontal (11) et qui présentent les logements (60) en forme de crochets.

8. Support selon la revendication 1 ou 2, **caractérisé en ce que** sur le ou les bras (54) de la plaque d'étanchéité (6) est prévue une fente (77) ouverte d'un côté, dans laquelle vient en prise un coulisseau (78) guidé dans une rainure (79) formée sur un bras (10) du bâti fixe (8), lequel coulisseau est relié au bras (54) par le biais d'un élément de fixation.

9. Support selon l'une des revendications précédentes, **caractérisé en ce que** le bâti fixe (8) et le bâti pivotant (13) présentent respectivement deux bras de bâti (10, 12) qui se chevauchent l'un l'autre à une extrémité, l'axe horizontal (11) étant prévu dans la région de chevauchement.

10. Support selon l'une des revendications précédentes, **caractérisé en ce qu'**un premier dispositif de réglage (15) est prévu, lequel accouple le bâti fixe (8) et le bâti pivotant (13) et est conçu pour le pivotement, autour de l'axe horizontal (11), du bâti pivotant (13) par rapport au bâti fixe (8) de position fixe.

11. Support selon la revendication 10, **caractérisé en ce que** le dispositif de réglage (15) présente un manchon de serrage (63), comprenant un écrou de manchon de serrage (64) et deux boulons filetés (65, 66) présentant des directions de filetage différentes, dont l'un est accouplé au bâti fixe (8) et l'autre est accouplé au bâti pivotant (13), ou **en ce que** le dispositif de réglage est un entraînement à fonctionnement électrique ou pneumatique ou comprend un tel entraînement.

12. Support selon la revendication 10, **caractérisé en ce que** le dispositif de réglage (15) présente une manivelle de poussée (16), présentant une broche filetée (18) de position fixe, pouvant être entraînée en rotation, sur laquelle roule un écrou de broche qui est relié à au moins une bielle (20) ou à un tube de poussée qui est relié de manière articulée au bâti pivotant (13) par le biais d'une barre d'articulation (21).

13. Support selon la revendication 11 ou 12, **caractérisé en ce que** l'écrou de manchon de serrage (64) peut être entraîné en rotation manuellement ou grâce à un moyen d'entraînement électrique ou pneumatique, ou **en ce que** la broche filetée (18) peut être entraînée en rotation par le biais d'une manivelle (17) manuelle ou grâce à un moyen d'entraînement électrique ou pneumatique.

14. Support selon l'une des revendications précédentes, **caractérisé en ce que** le bâti pivotant (13) présente une plaque de bâti (14) sur laquelle le dispositif de retenue (22) est agencé et monté pivotant, le dispositif de retenue (22) pouvant pivoter par rapport à la plaque de bâti (14) autour de l'axe vertical (27) par le biais d'un deuxième dispositif de réglage (30).

15. Support selon la revendication 14, **caractérisé en ce que** le deuxième dispositif de réglage (30) comprend une transmission à manivelle parallèle (29) pouvant être entraînée par le biais d'un entraînement à broche (67).

16. Support selon la revendication 14, **caractérisé en ce que** la plaque de bâti (14) présente un ou deux guides (75, 76) en forme d'arcs, dans lesquels viennent en prise des éléments de guidage (73, 74) du dispositif de retenue (22), le deuxième dispositif de réglage (30) présentant un entraînement à broche (67) comprenant une broche filetée (68) à position fixe, pouvant être entraînée en rotation, et un écrou de broche (70) roulant sur celle-ci, accouplé au dispositif de retenue (22), le ou chaque guide (75, 76) étant réalisé de préférence sous forme d'ouvertures dans lesquelles vient en prise l'élément de guidage (73, 74) réalisé en particulier sous forme de rouleau.

17. Support selon la revendication 16, **caractérisé en ce que** l'écrou de broche (70) est accouplé à un élément d'entraînement (71) qui vient en prise dans un logement (72) sur le dispositif de retenue (22), le logement étant réalisé de préférence sous forme d'ouverture sur une plaque porteuse (28) du dispositif de retenue (22), ouverture dans laquelle vient en prise l'élément d'entraînement (70) réalisé en particulier sous forme de rouleau.

18. Support selon l'une des revendications 15 à 17, **caractérisé en ce que** la transmission à manivelle parallèle (29) ou l'entraînement à broche (67) peut être actionné(e), par le biais d'une manivelle (18, 69), manuellement ou grâce à un moyen d'entraînement électrique ou pneumatique.

19. Support selon l'une des revendications précédentes, **caractérisé en ce que** le bâti fixe (8) présente un chariot (82) mobile horizontalement, sur lequel le bâti pivotant (13) est agencé et auquel la plaque d'étanchéité (6) est reliée par le biais de l'au moins un bras (54), le chariot (82) étant de préférence guidé de manière mobile linéairement sur une plaque de guidage (84) horizontale du bâti fixe (13).

20. Support selon l'une des revendications précédentes, **caractérisé en ce que** le bâti fixe (8) présente un chariot (83) mobile verticalement, par le biais duquel le bâti pivotant (13) et la plaque d'étanchéité (6) sont mobiles verticalement, le chariot (83) étant de préférence mobile sur une plaque de montage (87) du bâti fixe (8), par le biais de laquelle le bâti fixe (8) peut être fixé au dispositif de fusion (3).

21. Support selon la revendication 20, et la revendication 19, **caractérisé en ce que** le chariot (83) est formé au moyen d'une plaque de chariot (86) sur laquelle la plaque de guidage (84) est agencée.

22. Support selon l'une des revendications 19 à 21, **caractérisé en ce que** le chariot horizontal et/ou le chariot vertical (82, 83) peuvent être déplacés et bloqués manuellement, ou **en ce que** le chariot horizontal et/ou le chariot vertical (82, 83) peuvent être déplacés grâce à un moyen d'entraînement électrique ou pneumatique.

23. Support selon l'une des revendications précédentes, **caractérisé en ce qu'**un dispositif de refroidissement (81) est prévu pour le refroidissement de la plaque d'étanchéité (6).

24. Support selon la revendication 23, **caractérisé en ce que** le dispositif de refroidissement (81) est un dispositif de refroidissement à air, doté d'un élément de soufflage (96) par le biais duquel de l'air de refroidissement peut être soufflé sur la plaque d'étanchéité (6), l'élément de soufflage (96) étant ou comprenant de préférence une buse à fente (97).

25. Support selon l'une des revendications précédentes, **caractérisé en ce que** des moyens d'affichage (89, 90) servant à l'affichage du réglage angulaire autour de l'axe de pivotement horizontal et/ou de l'axe de pivotement vertical sont prévus.

26. Dispositif de fusion, en particulier four de fusion du verre, comprenant au moins son support selon l'une des revendications précédentes pour le logement d'une lance de brûleur.
